(19) Europäisches Patentamt / European Patent Office / Office européen des brevets

(11) **EP 2 115 527 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(51) Int Cl.:
***G02C 7/02*** *(2006.01)*

(21) Anmeldenummer: **08707297.1**

(22) Anmeldetag: **25.01.2008**

(86) Internationale Anmeldenummer:
**PCT/EP2008/000588**

(87) Internationale Veröffentlichungsnummer:
**WO 2008/089999 (31.07.2008 Gazette 2008/31)**

(54) **VERFAHREN ZUR OPTIMIERUNG EINES BRILLENGLASES**

METHOD FOR OPTIMISING A SPECTACLE LENS

PROCÉDÉ D'OPTIMISATION D'UN VERRE DE LUNETTES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.01.2007 DE 102007003857**

(43) Veröffentlichungstag der Anmeldung:
**11.11.2009 Patentblatt 2009/46**

(73) Patentinhaber: **Rodenstock GmbH**
**80687 München (DE)**

(72) Erfinder:
• **ESSER, Gregor**
**81735 München (DE)**
• **BECKEN, Wolfgang**
**81541 München (DE)**
• **ALTHEIMER, Helmut**
**87650 Baisweil-Lauchdorf (DE)**
• **SEIDEMANN, Anne**
**80337 München (DE)**
• **UTTENWEILER, Dietmar**
**82057 Icking (DE)**
• **MÜLLER, Werner**
**75443 Ötisheim (DE)**
• **WEHNER, Edda**
**82275 Emmering (DE)**

(74) Vertreter: **Müller-Boré & Partner Patentanwälte PartG mbB**
**Friedenheimer Brücke 21**
**80639 München (DE)**

(56) Entgegenhaltungen:
**WO-A-01/84213      WO-A-01/92948**
**WO-A-02/088830      DE-A1- 10 313 275**
**DE-A1-102005 057 533      DE-A1-102006 030 204**

**Beschreibung**

Die vorliegende Erfindung betrifft ein Verfahren, ein System und ein Computerprogrammprodukt zum Optimieren und insbesondere zum Herstellen eines Brillenglases.

Um ein Brillenglas insbesondere online auf Bestellung berechnen und optimieren zu können, ist es wünschenswert, ein sehr schnelles Verfahren zur Optimierung zu verwenden. In der Brillenoptik ist die Strahldurchrechnung ein sehr zeitaufwendiges Verfahren. Dies trifft insbesondere dann zu, wenn die Brillenglasflächen nicht einfache Kugeloberflächen sondern asphärische oder progressive Flächen darstellen. In diesem Fall stellt die Strahldurchrechnung vorzugsweise ein zweidimensionales Iterationsverfahren dar. Um die Abbildungseigenschaften eines Brillenglases zu berechnen und zu bewerten, spielt die Rechenzeit in der Regel eine untergeordnete Rolle. Will man jedoch das Brillenglas insbesondere mit Hilfe einer Zielfunktion optimieren, so spielt die Rechenzeit eine entscheidende Rolle. Dies trifft insbesondere auf individuelle Brillengläser zu, bei denen die asphärische Fläche vorzugsweise online auf Bestellung optimiert und berechnet werden soll.

WO 01/92948 A1 beschreibt ein Verfahren zum Entwerfen und Optimieren von Brillengläsern. Dazu werden wiederholt die Durchstoßpunkte der Hauptstrahlen durch die Oberflächen eines Brillenglases berechnet. Die optischen Eigenschaften des Brillenglases an den Durchstoßpunkten der Hauptstrahlen werden dann durch den Einfluss der Brillenglasoberflächen auf lokalisierte Wellenfronten um die Durchstoßpunkte herum ermittelt. Die lokalisierten Wellenfronten werden insbesondere mittels Taylor-Entwicklung bis zu quadratischen Termen dargestellt, um damit die sphärische und astigmatische Wirkung des Brillenglases zu ermitteln.

DE 103 13 275 A1 beschreibt ein Verfahren zur Berechnung eines individuellen, progressiven Brillenglases. Dabei wird die progressive Fläche insbesondere mittels B-Spines beschrieben. Die Optimierung des Brillenglases erfolgt insbesondere durch die Minimierung einer Zielfunktion an Bewertungsstellen. Dabei werden an jeder Bewertungsstelle mittels Strahlen und lokaler Wellenfrontdurchrechnung die optischen Eigenschaften des Brillenglases berechnet.

WO 01/84213 A2 beschreibt ein progressives Brillenglas bei dem zur Minimierung der Änderung der binokularen Abbildungseigenschaften bei horizontalen Blickbewegungen der Hub von binokularen Abbildungseigenschaften bei der Verfolgung eines bewegten Objektes unterhalb eines physiologisch vorgegebenen Grenze liegt.

Es ist Aufgabe der Erfindung, ein einfaches Entwerfen und Herstellen von individuell für einen Brillenträger optimierten Brillengläsern mit einer verbesserten optischen Qualität des Seheindrucks für den Brillenträger in Bezug auf individuellen Anforderungen bereitzustellen.

Diese Aufgabe wird durch ein Verfahren mit den im Anspruch 1, ein Computerprogrammprodukt mit den in Anspruch 11 und ein System mit den in Anspruch 12 angegebenen Merkmalen gelöst. Bevorzugte Ausführungsformen ergeben sich aus den Unteransprüchen.

Auch wenn die einzelnen Verfahrensschritte zur einfacheren Benennung alphiabetisch gekennzeichnet sind, ist die Erfindung nicht auf eine einzige Reihenfolge der Verfahrensschritte, insbesondere eine durch die alphabetische Bezeichnung vorgegebene Reihenfolge beschränkt.

Ein Design eines Brillenglases umfasst vorzugsweise die Verteilung der Soll-Werte für eine oder mehreren Abbildungsfehler, welche vorzugsweise in die Optimierung des Brillenglases als Zielwerte oder bei der Bestimmung der Zielwerte eingehen. Insbesondere wird ein Brillenglasdesign durch die Verteilung des Refraktionsfehlers (d.h. die Differenz des Brechwerts des Brillenglases von dem Brechwert, welcher mittels Refraktionsbestimmung ermittelt wird) und/oder die Verteilung des Astigmatismusfehlers bzw. die astigmatische Abweichung (d.h. die Differenz des Astigmatismus des Brillenglases von dem Astigmatismus, welcher mittels Refraktionsbestimmung ermittelt wird) charakterisiert. Ferner kann ein Brillenglasdesign ebenfalls die Verteilung der Soll-Werte für Vergrößerungs-, Verzerrungs- oder anderen Abbildungsfehler umfassen. Dabei kann es sich um Flächenwerte oder vorzugsweise um Gebrauchswerte, d.h. Werte in Gebrauchsstellung des Brillenglases handeln.

Das Bestimmen bzw. Ermitteln bzw. Optimieren eines Brillenglasdesigns umfasst vorzugsweise die Bestimmung der räumlichen Lage (insbesondere der vertikalen und/oder der horizontalen Lage) sowie gegebenenfalls der Größe der Sehbereiche des Brillenglases (d.h. des Nah-, Fern- und Zwischen- oder Progressionsbereichs). Die räumliche Lage der Sehbereiche wird insbesondere von der räumlichen Position der Fern- und Nahbezugspunkte vorgegeben. Die Größe der Sehbereiche wird vorzugsweise automatisch aus den Vorgaben für die räumliche Position des Fern- und Nahbezugspunkts berechnet.

Ein Hauptstrahl bezeichnet insbesondere einen Lichtstrahl ausgehend vom Objektpunkt durch den Augendrehpunkt und insbesondere durch die Pupillenmitte. Dabei wird zum Entwerfen des Brillenglases vorzugsweise ein Modellsystem mit den relevanten optischen Bezugspunkten vorzugsweise in Abhängigkeit von den erfassten Benutzerdaten entworfen.

Damit betrifft die Erfindung in einem Aspekt ein Verfahren zur Herstellung eines Brillenglases. Das Verfahren umfasst insbesondere ein Festlegen eines Designentwurfs des Brillenglases durch eine Flächendarstellung, bei der sich eine Änderung von Koeffizienten nur lokal auswirkt. Außerdem wird ein Ray-Tracing-Verfahren für die Bestimmung einer Vielzahl von Hauptstrahlen durch eine Vielzahl von Bewertungsstellen verwendet. Zur Berechnung lokaler Wellenfronten an der Vielzahl der Bewertungstellen wird ein Wavefront-Tracing-Verfahren und/oder ein Ray-Tracing-Verfahren verwendet. Außerdem erfolgt eine Bestimmung von optischen Wirkungen des Brillenglases an der Vielzahl der Bewertungsstellen aus den lokalen Wellenfronten. Vorzugsweise wird dabei eine Optimierungsroutine verwendet, welche die dünn besetzte Jacobimatix berücksichtigt. Insbesondere wird eine Optimierungsroutine gemäß NG-Peyton angewandt.

Vorzugsweise umfasst das Verfahren

- Modifizieren des Designentwurfs in Abhängigkeit von den ermittelten optischen Eigenschaften und den individuellen Benutzerdaten; und
- Wiederholen der Schritte c) bis f) auf Basis des modifizierten Designentwurfs.

Besonders bevorzugt werden diese Schritte so lange wiederholt, bis eine Zielfunktion einen gewünschten Wert erreicht hat. Vorzugsweise wird im Falle einer positiven bzw. als geeignet vorbestimmten Bewertung des Designentwurfs dieser als Design für das Brillenglas festgelegt wird.

Vorzugsweise umfassen die individuellen Benutzerdaten bzw. Anwendungsdaten des Brillenträgers optische Korrektionsdaten einer Fehlsichtigkeit des Brillenträgers und Gebrauchsdaten bezüglich einer individuellen Positionierung des Brillenglases für den Brillenträger und/oder bezüglich einer individuellen Sehaufgabe des Brillenträgers. Vorzugsweise umfassen die individuellen Gebrauchsdaten Fassungsdaten, insbesondere bezüglich eines Kastenmaßes der Fassungscheiben und/oder einer Brückenweite und/oder eines Fassungsscheibenwinkels und/oder einer Vorneigung, etc.. In einer bevorzugten Ausführungsform umfassen die individuellen Gebrauchsdaten bezüglich einer individuellen Sehaufgabe eine Vorgabe über hauptsächlich genutzte Blickwinkelbereiche und/oder hauptsächlich genutzte Objektentfernungen. Vorzugsweise umfassen die individuellen Benutzerdaten einen Hornhaut-Scheitel-Abstand und/oder eine Vorneigung und/oder eine Zentrierposition und/oder einen Pupillenabstand, usw..

Die optischen Korrektionsdaten umfassen vorzugsweise Werte für eine zu korrigierende dioptrische Wirkung (Sphäre) und/oder Zylinder und/oder Achslage und/oder Addition und/oder Prisma und/oder Basis, etc. und individuelle Gebrauchsstellungsdaten.

Vorzugsweise umfasst das Festlegen eines Designentwurfs für das Brillenglas ein Festlegen eines Koordinatensystems und ein Darstellen zumindest einer Startfläche des Brillenglases in dem Koordinatensystem zumindest teilweise durch Koeffizienten, von denen die zumindest eine Startfläche nur lokal, d.h. in einem begrenzten Flächengebiet abhängt, welches zumindest eine Bewertungsstelle umfasst. Diese begrenzte Flächengebiete umfasst vorzugsweise jeweils nur einen relativ kleinen Anteil einer gesamten Brillenglasfläche.

Vorzugsweise umfasst das Festlegen eines Designentwurfs ein Darstellen zumindest einer Startfläche des Brillenglases durch B-Spline-Funktionen.

Vorzugsweise umfasst die Vielzahl von Bewertungsstellen zumindest 1000, vorzugsweise zumindest 2000, noch mehr bevorzugt zumindest 5000, besonders bevorzugt zumindest 10000, am meisten bevorzugt zumindest 20000 Bewertungsstellen umfasst.

Vorzugsweise umfasst das Ermitteln eines Verlaufs von Hauptstrahlen ein Festlegen eines individuellen Modellsystems unter Berücksichtigung der erfassten Benutzerdaten. Das individuellen Modellsystems umfasst vorzugsweise ein Brillenglasmodell gemäß dem Designentwurf, ein Augenmodell und/oder ein Objektmodell gemäß den Benutzerdaten.

Vorzugsweise wird jedem Hauptstrahl eine Objektentfernung in Abhängigkeit von den erfassten Benutzerdaten insbesondere einer von den erfassten Benutzerdaten umfassten Sehaufgabe bzw. einer Anwendungssituation zugeordnet, wobei die lokale Wellenfront in Abhängigkeit von der dem jeweiligen Hauptstrahl zugeordneten Objektentfernung festgelegt wird.

Vorzugsweise umfasst das Ermitteln optischer Eigenschaften des Brillenglases an den Bewertungsstellen ein Ermitteln einer sphärischen Wirkung und/oder eines Astigmatismus und/oder einer Koma und/oder einer sphärischen Aberration und/oder eines Dreiblattfehlers (trefoil).

Vorzugsweise umfasst das Ermitteln des Verlaufs der Vielzahl von Hauptstrahlen ein

Ermitteln von Durchstoßpunkten und Durchstoßwinkeln der Hauptstrahlen durch die Brillenglasoberflächen, wobei das Bestimmen des Einflusses des Brillenglases auf die lokalen Wellenfronten umfasst:

- Bestimmen der schrägen Dicke des Glases entlang der jeweiligen Hauptstrahlen im Brillenglas;
- Bestimmen der Krümmungen der objektseitigen, also eintreffenden bzw. ankommenden bzw. auftreffenden Wellenfronten und/oder Krümmungen bzw. Hauptkrümmungen und -richtungen der auslaufenen Wellenfronten; und
- Bestimmen der Hauptkrümmungen und -richtungen der Brillenglasoberflächen an den Durchstoßpunkten.

Vorzugsweise umfasst das Bewerten des Designentwurfs ein Auswerten einer von den ermittelten optischen Eigenschaften abhängigen Zielfunktion und der Designentwurf wird vorzugsweise im Hinblick auf eine Minimierung der Zielfunktion modifiziert.

Vorzugsweise umfassen die ermittelten optischen Eigenschaften einen Astigmatismus $A_{glas}(i)$ des Brillenglases an der Bewertungsstelle i, welcher um einen Restastigmatismus $A_{ist}(i)$ von der in den Benutzerdaten für eine Vollkorrektion geforderten astigmatischen Wirkung abweicht, und eine sphärische Wirkung $D_{glas}(i)$ des Brillenglases an der Bewertungsstelle i, welche um eine Restwirkung $D_{ist}(i)$ von der in den Benutzerdaten für ein Vollkorrektion geforderten sphärischen Wirkung abweicht,

wobei für jede Bewertungsstelle ein Wert $A_{soll}(i)$ einer Fehlkorrektion des Astigmatismus und ein Wert $D_{soll}(i)$ einer Fehlkorrektion der dioptrischen Wirkung vorgegeben wird, und

wobei der Designentwurf des Brillenglases im Hinblick auf eine Minimierung einer Zielfunktion

$$F = \sum_i \left( A_{Ist}(i) - A_{Soll}(i) \right)^2 + \left( D_{Ist}(i) - D_{Soll}(i) \right)^2$$

modifiziert wird.

Vorzugsweise wird für jede Bewertungsstelle der Restastigmatismus aus dem Astigmatismus des Billenglases und einem von den individuellen Benutzerdaten umfassten Astigmatismus eines Auges des Brillenträgers durch die Kreuzzylindermethode berechnet.

In einem Aspekt stellt die Erfindung ein Verfahren zum Entwerfen bzw. Herstellen eines Brillenglases für einen Brillenträger bereitgestellt, umfassend:

- Erfassen zumindest eines Abbildungsfehlers höherer Ordnung für zumindest ein Auge des Brillenträgers; und
- Entwerfen eines Brillenglases unter Berücksichtigung des erfassten Abbildungsfehlers höherer Ordnung.

Als Abbildungsfehler höherer Ordnung wird im Sinne der Erfindung jeder Abbildungsfehler verstanden, der nicht nur prismatische, sphärische und astigmatische Komponenten umfasst. Abbildungfehler höherer Ordnung umfassen insbesondere Koma und/oder sphärische Aberration. In einer bevorzugten Ausführungsform umfassen Abbildungsfehler höherer Ordnung insbesondere "SEIDELsche Bildfehler", wie z.B. Öffnungsfehler Koma, Astigmatismus, Bildfeldwölbung, Dreiblattfehler und/oder Verzeichnung.

Vorzugsweise umfasst der Schritt a) des Erfassens von individuellen Benutzerdaten das Erfassen des zumindest einen Abbildungsfehlers höherer Ordnung, wobei das Entwerfen des Brillenglases unter Berücksichtigung des erfassten Abbildungsfehlers höherer Ordnung die Schritte b) bis f) umfasst. Vorzugsweise umfasst das Erfassen von Abbildungsfehlen höherer Ordnung ein Bestimmen einer Aberrationsfunktion, insbesondere einer nur vom radialen Abstand r von der Pupillenmitte abhängige Aberrationsfunktion $W_A(r)$ für das zumindest eine Auge des Brillenträgers.

Vorzugsweise umfasst das Erfassen von Abbildungsfehlen höherer Ordnung ein Festlegen eines kartesischen x-y-z-Koordinatensystems und ein Bestimmen einer Aberrationsfunktion $W(x,y)$ für das zumindest eine Auge des Brillenträgers insbesondere in Koordinaten dieses Koordinatensystems. Vorzugsweise wird die Aberrationsfunktion $W(r)$ für das zumindest eine Auge gemäß

$$W_A(r) = \sum_i \frac{S_i}{i!} r^i = S_1 * r + \frac{S_2}{2} * r^2 + \frac{S_3}{6} * r^3 + \frac{S_4}{24} * r^4 \dots$$

nach Potenzen des Abstands r von der Pupillenmitte entwickelt.

Vorzugsweise umfasst das Entwerfen eines Brillenglases ein Festlegen einer Aberrationsfunktion des Brillenglases auf Basis bzw. in Abhängigkeit von der Aberrationsfunktion des Auges.

Vorzugsweise umfasst das Festlegen der Aberrationsfunktion $W_G(R)$ des Brillenglases als Funktion eines Abstands R von einem Zentrierpunkt des Brillenglases ein Skalieren der Aberrationsfunktion $W_A(r)$ des Auges mittels eines Ersetzens des Abstands r durch einen Abstand $R \cdot \frac{R_P}{R_t}$, d.h. $W_G(R) = W_A\left( R \cdot \frac{R_P}{R_t} \right)$, mit einem Pupillenradius $R_P$ für das zumindest eine Auge des Brillenträgers und einem Transformationsradius $R_t$, welcher größer ist als der Pupillenradius Rp und nicht größer ist als der Radius $R_{G,max}$ des größten Kreises um den Zentrierpunkt des Brillenglases, der zumindest einen Punkt des Brillenglases insbesondere innerhalb der Brillenfassung umfasst. Vorzugsweise ist der Transformationsradius $R_t$ nicht größer als der Radius $R_{G,min}$ des größten Kreises um den Zentrierpunkt, der noch vollständing innerhalb der Fassungsscheibe liegt.

Vorzugsweise umfassen die ermittelten optischen Eigenschaften einen Astigmatismus $A_{glas}(i)$ des Brillenglases an der Bewertungsstelle i, welcher um einen Restastigmatismus $A_{ist}(i)$ von der in den Benutzerdaten für eine Vollkorrektion geforderten astigmatischen Wirkung abweicht, eine dioptrische Wirkung $D_{glas}(i)$ des Brillenglases an der Bewertungsstelle i, welche um eine Restwirkung $D_{ist}(i)$ von der in den Benutzerdaten für eine Vollkorrektion geforderten dioptrischen Wirkung abweicht, und zumindest einen Wert $Z_{glas}(i)$ einer optischen Wirkung höherer Ordnung, insbesondere eines Maßes einer Aberration höherer Ordnung des Brillenglases an der Bewertungsstelle i, welcher um einen Restfehler $Z_{ist}(i)$ von der in den Benutzerdaten für eine Vollkorrektion geforderten Korrekturwirkung abweicht, wobei für jede Bewertungsstelle ein Wert $A_{soll}(i)$ einer Fehlkorrektion des Astigmatismus, ein Wert $D_{soll}(i)$ einer Fehlkorrektion der dioptrischen Wirkung und ein Wert $Z_{soll}(i)$ einer Fehlkorrektion für den zumindest einen Abbildungsfehler höherer Ordnung vorgegeben wird, und wobei der Entwurf des Brillenglases im Hinblick auf eine Minimierung einer Zielfunktion

$$F = \sum_i g_A(i) \cdot (A_{Ist}(i) - A_{Soll}(i))^2 + g_D(i) \cdot (D_{Ist}(i) - D_{Soll}(i))^2 + g_Z(i) \cdot (Z_{Ist}(i) - Z_{Soll}(i))^2$$

modifiziert wird, wobei Gewichtungsfunktioneng vorgesehen werden.

In einer weiteren Beispiel könnte eine Zielfunktion folgendermaßen verwendet werden:

$$F = \sum_i (A_{Ist}(i) - A_{Soll}(i))^2 + (D_{Ist}(i) - D_{Soll}(i))^2 + R(i)$$

wobei die Zielfunktion von einer Restfunktion R(i) abhängt, in der Aberrationen höherer Ordnung berücksichtigt sind. Eine weitere bevorzugte Zielfunktion könnte lauten:

$$F = \sum_i g_A(i) \cdot (A_{Ist}(i) - A_{Soll}(i))^2 + g_D(i) \cdot (D_{Ist}(i) - D_{Soll}(i))^2 + R_Z(i)$$

Vorzugsweise wird analog zu oben verwendet:

$$R_Z(i) = \sum_k g_k(i) \cdot (Z_{k,Ist}(i) - Z_{k,Soll}(i))^2$$

Vorzugsweise werden die lokalen Wellenfronten mit Zernikepolynomen und/oder einer Taylorreihe dargestellt bzw. entwickelt.

Vorzugsweise umfasst das Verfahren ein Festlegen einer Pupillensensorikfunktion zur Beschreibung einer abnehmenden sensorischen Gewichtung zum Pupillenrand hin, insbesondere zur Beschreibung des Stiles-Crawford-Effekts, und ein Festlegen eines Satzes von orthogonalen Funktionen für die Darstellung der lokalen

Wellenfronten unter Berücksichtigung bzw. unter Einbeziehung der Pupillensensorikfunktion.

In einer bevorzugten Ausführungsform ist die Größe $Z_{glas}(i)$ für eine einzelne Aberration an der Bewertungsstelle i nach Zernike. In einer anderen bevorzugten Ausführungsform umfasst sie eine gewichtete Summe aus Aberration an der Bewertungsstelle i nach Zernike, oder für ein Maß der Aberrationen, das auf der Wellenfrontaberration $W(x,y)$ der Pupille als Funktion der Pupillenkoordinaten $x,y$ basiert und insbesondere durch eine der folgenden Möglichkeiten gegeben ist:

a) $RMS_W$ (root mean square) $RMS_W = \sqrt{\dfrac{1}{A} \int\limits_{pupil} (W(x,y) - \overline{W})^2 \, dx dy}$ , wobei A die Pupillenfläche ist und $\overline{W}$

den Mittelwert bedeutet

b) Maximaler Hub der Wellenfrontaberration, $PV = \max(W(x,y)) - \min(W(x,y))$

c) $RMS_S$ (root mean square wavefront slope)

$$RMS_s = \sqrt{\frac{1}{A}\int_{pupil}\left(W_x(x,y)-\overline{W}_x\right)^2 + \left(W_y(x,y)-\overline{W}_y\right)^2 dxdy}$$ , wobei A die Pupillenfläche

und $M_x = \partial W/\partial x$, $W_y = \partial W/\partial y$ die partiellen Ableitungen der Wellenfront sind

d) R(D50), Durchmesser des Gebietes um das Maximum der point spread function (PSF), in dem die Hälfte der Intensität ankommt: $0.5 = \int_0^{2\pi}\int_0^{r(D50)} psf(r,\vartheta)rdrd\vartheta$ , wobei $psf(r,\vartheta)$ die PSF in Polarkoordinaten $r,\vartheta$ der Bildebene

ist

e) Breite EW der PSF $EW = \sqrt{4\left(\int_{-\infty}^{\infty}\int_{-\infty}^{\infty} psf(x,y)dxdy\right)/(\pi \cdot psf(x_0,y_0))}$ , wobei $x_0$, $y_0$ die Koordinaten

des Maximums der PSF sind.

f) Wurzel SM aus dem zweiten Moment der Lichtverteilung,

$$SM = \sqrt{\left(\int_{-\infty}^{\infty}\int_{-\infty}^{\infty}(x^2+y^2)psf(x,y)dxdy\right)\Big/\left(\int_{-\infty}^{\infty}\int_{-\infty}^{\infty}psf(x,y)dxdy\right)}$$

g) Halbe Breite auf halber Höhe, HWHH, $HWHH = \sqrt{\frac{1}{\pi}\left(\int_{-\infty}^{\infty}\int_{-\infty}^{\infty}q_H(x,y)dxdy\right)}$ , wobei $q_H(x,y) = 1$ für $psf(x,$

$y) > max(psf)/2$ und $q_H(x, y) = 0$ sonst

h) Korrelationsbreite CW der Lichtverteilung $CW = \sqrt{\frac{1}{\pi}\left(\int_{-\infty}^{\infty}\int_{-\infty}^{\infty}q_A(x,y)dxdy\right)}$ , wobei $q_A(x,y)=1$ für

$PSF \circ PSF > max(PSF \circ PSF)/2$ und $q_A(x,y)=0$ sonst, und $PSF \circ PSF > max(PSF \circ PSF)/2$ die Autokorrelation der PSF ist

i) Strehl-Verhältnis SRX, $SRX = \frac{max(psf)}{max(psf_{DL})}$ , wobei $PSf_{DL}$ die beugungslimitierte PSF ist

j) Bruchteil LIB der Energie, die in den Bereich des Beugungskerns fällt, $LIB = \int_{DLcore} psf_N(x,y)dxdy$ , wobei

$psf_N$ die auf 1 normierte PSF ist

k) Standardabweichung STD der Lichtverteilung, bezogen auf jene der beugungslimitierten Lichtverteilung,

$$STD = \sqrt{\int_{PSF}(psf(x,y)-\overline{psf})^2 dxdy}\Big/\sqrt{\int_{PSF}(psf_{DL}(x,y)-\overline{psf}_{DL})^2 dxdy}$$ , wobei PSF ein Gebiet um das Zentrum der PSF ist, das den wesentlichen Anteil der Intensität erfasst

l) Entropie ENT der PSF, $ENT = -\int_{-\infty}^{\infty}\int_{-\infty}^{\infty} psf(x,y)\ln psf(x,y)dxdy$

m) Schärfe NS des visuellen Systems,

$$NS = \left(\int_{-\infty}^{\infty}\int_{-\infty}^{\infty} psf(x,y)g_N(x,y)dxdy\right)\Big/\left(\int_{-\infty}^{\infty}\int_{-\infty}^{\infty} psf_{DL}(x,y)g_N(x,y)dxdy\right)$$ , wobei $g_N$ eine Gewichtsfunktion des visuellen Systems ist

n) Visuelles Strehl-Verhältnis VSX,

$$NS = \left( \int\limits_{-\infty}^{\infty}\int\limits_{-\infty}^{\infty} psf(x,y)N_{csf}(x,y)dxdy \right) \Big/ \left( \int\limits_{-\infty}^{\infty}\int\limits_{-\infty}^{\infty} psf_{DL}(x,y)N_{csf}(x,y)dxdy \right),$$ wobei $N_{csf}$ eine Gewichtsfunktion des visuellen Systems ist, die gleich der Fouriertransformierten der Kontrastempfindlichkeitsfunktion des visuellen Systems ist

o) Abschneidefrequenz der radialen Modulationstransferfunktion, SFcMTF=höchste (Orts-)Frequenz, für welche rMTF>Schwelle des visuellen Systems ist, wobei $rMTF(f) = \int\limits_{0}^{2\pi} abs(OTF(f,\varphi))d\varphi$ und OTF die optische Transferfunktion ist

p) Abschneidefrequenz der radialen optischen Transferfunktion, SFcOTF=höchste (Orts-)Frequenz, für welche rOTF> Schwelle des visuellen Systems ist, wobei $rOTF(f) = \int\limits_{0}^{2\pi} OTF(f,\varphi)d\varphi$ und OTF die optische Transferfunktion ist

q) Sichtbarkeitsgebiet der rMTF,

$$AreaMTF = \left( \int\limits_{0}^{cutoff} rMTF(f)df - \int\limits_{0}^{cutoff} T_N(f)df \right) \Big/ \left( \int\limits_{0}^{cutoff} rMTF_{DL}(f)df - \int\limits_{0}^{cutoff} T_N(f)df \right),$$ wobei $T_N(f)$

die Kontrastschwellenfunktion des visuellen Systems ist, die gleich der Inversen der Kontrastempfindlichkeitsfunktion des visuellen Systems ist

r) Sichtbarkeitsgebiet der rOTF,

$$AreaOTF = \left( \int\limits_{0}^{cutoff} rOTF(f)df - \int\limits_{0}^{cutoff} T_N(f)df \right) \Big/ \left( \int\limits_{0}^{cutoff} rOTF_{DL}(f)df - \int\limits_{0}^{cutoff} T_N(f)df \right)$$

s) Strehl-Verhältnis, berechnet im Frequenzraum, MTF-Methode,

$$SRMTF = \left( \int\limits_{-\infty}^{\infty}\int\limits_{-\infty}^{\infty} MTF(f_x,f_y)df_x df_y \right) \Big/ \left( \int\limits_{-\infty}^{\infty}\int\limits_{-\infty}^{\infty} MTF_{DL}(f_x,f_y)df_x df_y \right)$$

t) Strehl-Verhältnis, berechnet im Frequenzraum, OTF-Methode,

$$SROTF = \left( \int\limits_{-\infty}^{\infty}\int\limits_{-\infty}^{\infty} OTF(f_x,f_y)df_x df_y \right) \Big/ \left( \int\limits_{-\infty}^{\infty}\int\limits_{-\infty}^{\infty} OTF_{DL}(f_x,f_y)df_x df_y \right)$$

u) Visuelles Strehl-Verhältnis, berechnet im Frequenzraum, MTF-Methode,

$$SRMTF = \left( \int\limits_{-\infty}^{\infty}\int\limits_{-\infty}^{\infty} CSF_N(f_x,f_y)MTF(f_x,f_y)df_x df_y \right) \Big/ \left( \int\limits_{-\infty}^{\infty}\int\limits_{-\infty}^{\infty} CSF_N(f_x,f_y)MTF_{DL}(f_x,f_y)df_x df_y \right)$$

, wobei $CSF_N(f_x,f_y)$ die Kontrastempfindlichkeitsfunktion des visuellen Systems ist
v) Strehl-Verhältnis, berechnet im Frequenzraum, OTF-Methode,

$$SROTF = \left( \int\limits_{-\infty}^{\infty}\int\limits_{-\infty}^{\infty} CSF_N(f_x,f_y)OTF(f_x,f_y)df_x df_y \right) \bigg/ \left( \int\limits_{-\infty}^{\infty}\int\limits_{-\infty}^{\infty} CSF_N(f_x,f_y)OTF_{DL}(f_x,f_y)df_x df_y \right)$$

w) Volumen unter der OTF, normiert auf das Volumen unter der MTF,

$$VOTF = \left( \int\limits_{-\infty}^{\infty}\int\limits_{-\infty}^{\infty} OTF(f_x,f_y)df_x df_y \right) \bigg/ \left( \int\limits_{-\infty}^{\infty}\int\limits_{-\infty}^{\infty} MTF(f_x,f_y)df_x df_y \right)$$

x) Gewichtetes Volumen unter der OTF, normiert auf das Volumen unter der MTF,

$$VNOTF = \left( \int\limits_{-\infty}^{\infty}\int\limits_{-\infty}^{\infty} CSF_N(f_x,f_y)OTF(f_x,f_y)df_x df_y \right) \bigg/ \left( \int\limits_{-\infty}^{\infty}\int\limits_{-\infty}^{\infty} CSF_N(f_x,f_y)MTF(f_x,f_y)df_x df_y \right)$$

In einem Aspekt betrifft die Erfindung ein Verfahren zum Herstellen eines Brillenglases, umfassend ein Verfahren zum Entwerfen eines Brillenglases für einen Brillenträger gemäß der vorliegenden Erfindung oder einer bevorzugten Ausführungsform und ein Fertigen des Brillenglases nach dem ermittelten Design.

In einem Aspekt stellt die Erfindung ein Computerprogrammprodukt bereit, umfassend Programmcode, welcher, wenn in einem Computersystem geladen und ausgeführt, zur Durchführung eines Verfahrens gemäß der vorliegenden Erfindung oder einer bevorzugten Ausführungsform ausgelegt ist.

In einem Aspekt stellt die Erfindung ein System zum Entwerfen eines Brillenglases bereit, wobei das System ausgelegt ist, Verfahrensschritte gemäß der vorliegenden Erfindung oder einer bevorzugten Ausführungsform auszuführen.

Die Erfindung wird nachfolgend mit Bezug auf begleitende Zeichnungen bevorzugter Ausführungsformen beispielhaft beschrieben. Dabei zeigen:

Fig. 1: einen beispielhaften Strahlengang ein beispielhaftes Auge und ein Brillenglas zur Darstellung der Rotation der Eintrittspupille des Auges bei Blickbewegungen;

Fig. 2: ein Brillenglas, das in allen Durchblickpunkten eine relativ geringe sph. Aberration von 0,025 Mikrometer aufweist;

Fig. 3: den sphärischen Fehler des Brillenglas von Fig. 2 für $|x|,|y| \leq 10 mm$ in Einheiten von dpt;

Fig.4: den Astigmatismus eines bevorzugten Brillenglases, bei dem die sphärische Aberration von $c = 0,5$ Mikrometer für einen Brillenglasdurchmesser von 40 mm ($r_{brillenglas}$ = 20 mm) korrigiert wurde;

Fig. 5: eine schematische Darstellung einer Abbildung eines Objektpunktes in einen Bildpunkt an einer Linse mit zwei Flächen mit den Brechwerten D1, D2 und der Mittendicke d;

Fig. 6: Brechungsgesetz nach Snellius;

Fig. 7: Brechung einer sphärischen Wellenfront an einer sphärischen Fläche;

Fig. 8: Übergang auf den schrägen Einfall und das Verlassen der Rotationssymmetrie. Eine sphärische Wellenfront trifft schräg auf eine sphärische Fläche oder eine astigmatische Fläche, bei der eine Hauptkrümmungsrichtung mit der Brechungsebene zusammenfällt;

Fig.9: lokale Koordinatensysteme der Fläche, der einfallenden und der austretenden Wellenfront;

Fig. 10: Zusammenhang zwischen den Koordinaten y der auftreffenden Wellenfront, $y_s$ der brechenden Fläche und y' der austretenden Wellenfront bei Verwendung von drei lokalen Koordinatensystemen;

Fig. 11: Zusammenhang zwischen den Koordinaten y der auftreffenden Wellenfront, $y_s$ der brechenden Fläche und y' der austretenden Wellenfront bei Verwendung eines globalen Koordinatensystems; und

Fig. 12: eine schematische Darstellung des physiologischen und physikalischen Modells eines Brillenglases in einer vorgegebenen Gebrauchsstellung.

In einem Verfahren gemäß einer bevorzugten Ausführungsform der vorliegenden Erfindung werden nur noch der zentralen Hauptstrahl mit Hilfe eines Ray-Tracing-Verfahrens berechnet. Anschließend werden die Abbildungseigenschaften aus den Eigenschaften von lokalen Wellenfronten mit Hilfe eines Wavefont-Tracing-Verfahrens berechnet. Insbesondere werden gemäß einer bevorzugten Ausführungsform für zumindest eine Blickrichtung, insbesondere für jede Blickrichtung, die Abbildungseigenschaften (Brechwert und Astigmatismus) vorzugsweise direkt aus den Daten des zentralen Hauptstrahls für die jeweilige Blickrichtung mit seinen Ein- und Ausfallswinkeln an den Brillenglasflächen, der schrägen Dicke, den Krümmungen bzw. den Hauptkrümmungen und -richtungen der ankommenden Wellenfront und den Hauptkrümmungen und -richtungen der Brillenglasoberflächen am Durchstoßpunkt berechnet.

Besonders bevorzugt wird für jede Blickrichtung nur einmal eine Strahliteration durchgeführt. Insbesondere der mit Strahliterationen verbundene Rechenaufwand lässt sich somit sehr stark reduzieren. Vorzugsweise wird das Brillenglas mittels einer Zielfunktion optimiert. Eine beispielhafte, bevorzugte Zielfunktion lautet dabei

$$\min F = \sum_i \left(A_{Ist}(i) - A_{Soll}(i)\right)^2 + \left(D_{Ist}(i) - D_{Soll}(i)\right)^2 \qquad (1)$$

mit

$A_{ist}(i)$ = Tatsächlicher Astigmatismus an der i-ten Bewertungsstelle;
$A_{soll}(i)$ = Geforderter Astigmatismus an der i-ten Bewertungsstelle;
$D_{ist}(i)$ = Tatsächlicher Brechwert an der i-ten Bewertungsstelle; und
$D_{soll}(i)$ = Geforderter Brechwert an der i-ten Bewertungsstelle.

Ein besonderer Vorzug der Bedeutung der Soll-Größen besteht darin, dass sie unabhängig von der Verordnung gelten. Sie geben insbesondere an, um welchen Wert die betreffende Größe vom Wert Null der Vollkorrektion abweichen soll. Der Ist-Astigmatismus ist insbesondere der Restastigmatismus der Kombination aus Brillenglas und Auge, der vorzugsweise durch die Kreuzzylindermethode berechnet wird. Entsprechend ist der Ist-Refraktionsfehler insbesondere die Sphäre der so berechneten Kombination aus Glas und Auge.

Vorzugsweise werden Brechwert und Astigmatismus folgendermaßen berechnet:

Vorzugsweise werden beide Größen aus der Kombination der Refraktionsmatrix $S_R$ und der Vergenzmatrix $S_{SK}$, die die einfallende Wellenfront in Gebrauchsstellung nach Durchquerung des Glases an der Scheitelpunktkugel beschreibt bestimmt. Zur bevorzugten Berechnung von $S_{SK}$ wird beispielhaft auf Gleichung (7) verwiesen. Die Refraktionsmatrix wird vorzugsweise bestimmt durch

$$S_R = \begin{pmatrix} Sph_R - \dfrac{Zyl_R}{2}\cos 2\Psi_R & -\dfrac{Zyl_R}{2}\sin 2\Psi_R \\[2mm] -\dfrac{Zyl_R}{2}\sin 2\Psi_R & Sph_R + \dfrac{Zyl_R}{2}\cos 2\Psi_R \end{pmatrix}, \qquad (2)$$

wobei $Sph_R$ das sphärische Äquivalent der Refraktionsbestimmung ist, $Zyl_R$ der refraktionierte Zylinder und $\psi_R$ seine Achslage. Die Kombination aus $S_R$ und $S_{SK}$ wird vorzugsweise durch die Differenzmatrix

$$S_\Delta = S_{SK} - S_R \qquad (3)$$

bestimmt. Im Fall einer Vollkorrektion gilt $S_\Delta = \begin{pmatrix} 0 & 0 \\ 0 & 0 \end{pmatrix}$, was in der Praxis meist nur an wenigen einzelnen Punkten im Glas tatsächlich erreicht werden kann. Im allgemeinen Fall ist die Matrix $S_\Delta = \begin{pmatrix} S_{11} & S_{12} \\ S_{12} & S_{22} \end{pmatrix}$ von Null verschieden aber symmetrisch. Vorzugsweise wird sie in folgender From parametrisiert:

$$S_\Delta = \begin{pmatrix} Sph_\Delta - \dfrac{Zyl_\Delta}{2}\cos 2\Psi_\Delta & -\dfrac{Zyl_\Delta}{2}\sin 2\Psi_\Delta \\ -\dfrac{Zyl_\Delta}{2}\sin 2\Psi_\Delta & Sph_\Delta + \dfrac{Zyl_\Delta}{2}\cos 2\Psi_\Delta \end{pmatrix} \qquad (4)$$

Dabei ist $Sph_\Delta$ das sphärische Äquivalent der Refraktionsabweichung, $Zyl_\Delta$ der Fehlzylinder und $\psi_\Delta$ seine Achslage. Vorzugsweise werden die bei gegebener Matrix die Größen $Sph_\Delta$ und $Zyl_\Delta$ aus den Eigenwerten von $S_\Delta$ bestimmt, insbesondere durch:

$$Sph_\Delta = \frac{S_{11} + S_{22}}{2}$$
$$Zyl_\Delta = \sqrt{4S_{12}^2 + \left(S_{11} - S_{22}\right)^2} \qquad (5)$$

Vorzugsweise werden diese berechneten Größen als Ist-Werte der Optimierung an den jeweiligen Durchstoßpunkten herangezogen bzw. verwendet, d.h.

$$D_{ist}(i) = Sph_\Delta(i)$$
$$A_{ist}(i) = Zyl_\Delta(i) \qquad (6)$$

Die Vergenzmatrix $S_{SK}$ an der Scheitelpunktkugel wird vorzugsweise durch

$$S_{SK} = R_2 S'_2 \left[ 1 - \left(e - \frac{1}{kS}\right) S'_2 \right]^{-1} R_2^{-1} \qquad (7)$$

aus der Vergenzmatrix $S'_2$ am Durchstoßpunkt der Rückfläche bestimmt. $S'_2$ wiederum wird vorzugsweise durch ein Verfahren zur Durchrechnung einer Wellenfront durch die beiden Gläser, die durch die Abhängigkeiten von Tabelle 1 beschrieben wird, ermittelt. Hierbei bedeuten die einzelnen Faktoren (grundsätzlich auszuwerten an den Durchstoßpunkten des Hauptstrahles durch die Flächen):

**Tabelle 1:** Formelsatz zur Auswertung des Resultates in Gleichung (7)

| Index 1,2 | Bezogen auf Vorderfläche bzw. Rückfläche |
|---|---|
| Ungestrichene/gestrichene Größen | Objektseitig/bildseitig der jeweiligen Fläche ausgewertet |
| $S'_i = T_i S_i T_i + \tilde{D}_i$ , $i = 1,2$ | Krümmungsmatrizen der Wellenfronten nach der Brechung an der i-ten Fläche nach dem Brechungsgesetz unter Berücksichtigung des schrägen Einfalls |

(fortgesetzt)

| | |
|---|---|
| $$\mathbf{S}_2 = \mathbf{R}_{12}^{-1}\mathbf{N}_e\mathbf{S'}_1\,\mathbf{R}_{12}$$ | Krümmungsmatrix der auf die Rückfläche einfallenden Wellenfront, zu berechnen nach dem Transfer von der Vorderfläche |
| $$\mathbf{S}_1 = \frac{1}{s_1}\mathbf{1}$$ | Krümmungsmatrix der einfallenden (sphärischen) Wellenfront an der Vorderfläche (1 steht für die 2X2-Einheitsmatrix) |
| $$\mathbf{N}_e^{-1} = \mathbf{1} - \frac{d}{n}\mathbf{S'}_1$$ | Inverse Matrix der "Eigenvergrößerung" |
| $$\tilde{\mathbf{D}}_i = \nu_i\mathbf{C'}_i^{-1}\,\mathbf{D}_i\mathbf{C'}_i^{-1}\,, \quad i = 1,2$$ | Unter Berücksichtigung des schrägen Einfalls korrigierter Ausdruck für die Flächenbrechwertmatrix der i-ten Fläche |
| $$\mathbf{T}_i = \mathbf{C}_i\mathbf{C'}_i^{-1}, \quad i = 1,2$$ $$\mathbf{C}_i = \begin{pmatrix} \cos\alpha_i & 0 \\ 0 & 1 \end{pmatrix}, \quad i = 1,2$$ $$\mathbf{C'}_i = \begin{pmatrix} \cos\alpha'_i & 0 \\ 0 & 1 \end{pmatrix}, \quad i = 1,2$$ | 2X2-Neigungsmatrizen zur Berücksichtigung des Einflusses der schrägen Einfalls an der i-ten Fläche auf die gebrochene Wellenfront |
| $\mathbf{R}_2 = \mathbf{R}(\varphi_2)$ | 2X2-Drehmatrix (innerhalb der Ebene senkrecht zum objektseitigen Hauptstrahl) vom System der Rückfläche (definiert durch den Vektor senkrecht zur Brechungsebene) auf die entsprechende Bezugsrichtung, auf die auch die Achslage des Auges nach korrekter Berücksichtigung der Listing'schen Regel bezogen werden muss |
| $\mathbf{R}_{12} = \mathbf{R}(\varphi_{12})$ | 2X2-Drehmatrix innerhalb der Ebene senkrecht zum Hauptstrahl zwischen den Flächen, die den Vektor senkrecht zur Brechungsebene an der Vorderfläche in den entsprechenden Vektor an der Rückfläche überführt |
| $$\mathbf{R}(\varphi) = \begin{pmatrix} \cos\varphi & -\sin\varphi \\ \sin\varphi & \cos\varphi \end{pmatrix}$$ | Form der 2X2-Drehmatrix |
| $$\mathbf{D}_i = $$ $$\begin{pmatrix} Sph_i - \dfrac{Zyl_i}{2}\cos 2\Psi_i & -\dfrac{Zyl_i}{2}\sin 2\Psi_i \\ -\dfrac{Zyl_i}{2}\sin 2\Psi_i & Sph_i - \dfrac{Zyl_i}{2}\cos 2\Psi_i \end{pmatrix}$$ | Flächenbrechwertmatrix der i-ten Fläche |
| $\alpha_i, \alpha'_i$ | Einfalls/Ausfallswinkel an der i-ten Fläche |
| $$Sph_1 = (n-1)\frac{1}{2}\left(\frac{1}{r_1^a} + \frac{1}{r_1^b}\right)$$ | Sphärisches Äquivalent der Vorderfläche |

| | |
|---|---|
| $$Zyl_1 = (n-1)\frac{1}{2}\left\|\frac{1}{r_1^{a}} - \frac{1}{r_1^{b}}\right\|$$ | Zylinder der Vorderfläche |
| $$Sph_2 = (1-n)\frac{1}{2}\left(\frac{1}{r_2^{a}} + \frac{1}{r_2^{b}}\right)$$ | Sphärisches Äquivalent der Rückfläche |
| $$Zyl_2 = (1-n)\frac{1}{2}\left\|\frac{1}{r_2^{a}} - \frac{1}{r_2^{b}}\right\|$$ | Zylinder der Rückfläche |
| $$r_i^{a}, r_i^{b}$$ | Hauptkrümmungsradien der i-ten Fläche |
| $\psi_i$ | Winkel zwischen dem Normalenvektor s der Brechungsebene an der i-ten Fläche und der Richtung s, in die der stärker gekrümmte Hauptschnitt ausläuft. |
| $$v_1 = \frac{n\cos\alpha'_1 - \cos\alpha_1}{n-1}$$ | Korrekturfaktor zur Berücksichtigung des schrägen Einfalls an der Vorderfläche (bewirkt Konsistenz mit den Coddingtonschen Gleichungen, Diepes, S.125) |
| $$v_2 = \frac{\cos\alpha'_2 - n\cos\alpha_2}{1-n}$$ | Korrekturfaktor zur Berücksichtigung des schrägen Einfalls an der Rückfläche |
| $s_1$ | skalare Eingangsschnittweite |
| $d$ | Schiefe Dicke |
| $e$ | Schiefer Abstand von der Hornhaut zum Durchstoßpunkt auf der Rückfläche |
| $kS$ | Krümmung der Scheitelpunktkugel |

Mit dieser Methode wird gemäß einer bevorzugten Ausführungsform Brechwert und/oder Astigmatismus lokal ermittelt bzw. bestimmt. Um die Abbildungseigenschaften an einer Bewertungstelle zu bestimmen, werden vorzugsweise nur die ersten und zweiten Ableitungen der Fläche an dieser lokalen Stelle ermittelt.

Vorzugsweise wird eine Flächenbeschreibung für die asphärische Fläche verwendet, bei der sich eine Änderung eines die Fläche beschreibenden Koeffizienten nur lokal auswirkt. Besonders bevorzugt wird hierbei eine B-Spline-Darstellung verwendet. Die Elemente der Jacobimatrix sind die Ableitungen der Abbildungseigenschaften an jeder Bewertungsstelle i nach jedem Koeffizienten j der Flächendarstellung. Durch die Verwendung einer B-Spline-Flächendarstellung und von lokalen Wellenfronten ergibt sich vorteilhaft eine bestimmte Struktur der Jacobimatrix, in der die meisten Elemente der Jacobimatrix den Wert Null aufweisen, da sich die Koeffizienten nur lokal auswirken und sich auch die Abbildungseigenschaften aus den lokalen Flächeneigenschaften bestimmen lassen. Damit lassen sich auch eine große Zahl an Bewertungsstellen, also eine hohe Ortsauflösung beim Entwerfen eines Brillenglases verwenden, wodurch die Genauigkeit verbessert werden kann. Vorzugsweise werden mehr als 5000 Bewertungsstellen und 2000 Koeffizienten bei der Optimierung eines progressiven Brillenglases verwendet.

Besonders bevorzugt wird als Optimierungsverfahren ein Verfahren verwendet, das die dünn besetzte Struktur der Jacobimatrix ausnutzt. Besonders bevorzugt wird das Verfahren nach NG-Peyton verwendet.

Durch ein schnelles Verfahren zur Berechnung der Abbildungsfehler höherer Ordnung wird ermöglicht, ein Brillenglas zu konstruieren, welches die Abbildungsfehler des Auges in geeigneter Weise berücksichtigt.

Eine Korrektur von Abbildungsfehlern höherer Ordnung ist wichtig für das Sehen. Damit kommt bei der Bewertung von Brillengläsern auch der Berücksichtigung von Aberrationen höherer Ordnung, insbesondere Koma und sph. Aberration eine wichtige Bedeutung zu. insbesondere wird berücksichtigt, dass die visuelle Performance durch die Korrektur von Aberrationen beispielsweise bis zur einschließlich 5. Ordnung, eine Steigerung der Bildqualität ergeben. Insbesondere wird berücksichtigt, dass Abbildungsfehler höherer Ordnung individuell, d.h. von Brillenträger zu Brillenträger, stark schwanken, weshalb vorzugsweise eine individuelle Korrektur vorgenommen wird. Vorzugsweise wird berücksichtigt, dass der rotationssymmetrische Term der sph. Aberration sich im Mittel der Bevölkerung von 0, unterscheidet. In einer bevorzugten Ausführungsform wird somit hierfür eine zumindest teilweise eine durchschnittliche Korrektur vorgenommen bzw. berücksichtigt.

Dementsprechend ist bei Personen mit normaler Aberration nicht nur durch die Korrektion von Sphäre, Zylinder und sphärischer Aberration eine entscheidende Verbesserung der optischen Qualität zu erwarten, sondern auch durch die zusätzliche Korrektion von Aberrationen höherer Ordnungen. Vorzugsweise wird berechnet, wie viele Personen eines großen Kolletivs von der Korrektion bestimmter Aberrationen wie stark profitieren, insbesondere ausgedrückt im sogenannten Strehl Verhältnis.

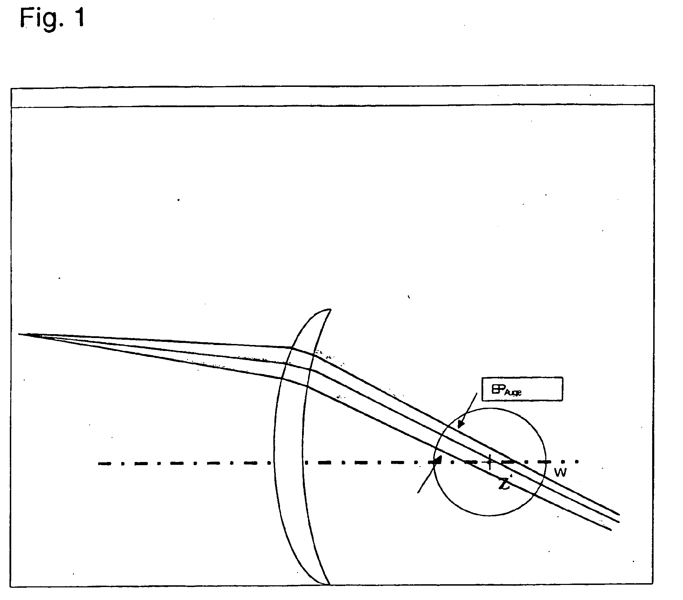

Insbesondere wird berücksichtigt, dass bei einem Brillenglas im Gegensatz zu Kontaktlinsen, Intraokularlinsen oder optischen Systemen keine ortsfeste Blende gegeben ist. Somit unterscheidet sich ein Brillenglas fundamental von optischen Instrumenten, wie z.B. Objektiven, dadurch, dass die Aperturblende (Eintrittspupille des Auges, EP) nicht ortsfest ist. Bei Blickbewegungen rotiert die Eintrittspupille des Auges um den Augendrehpunkt Z', während das Brillenglas ortsfest bleibt (siehe Fig. 1). Bei Kontaktlinsen und insbesondere Intraokularlinsen hingegen rotiert die Linse in gleichem Maße wie die Eintrittspupille.

Weiterhin ist der Abstand zwischen Brillenglas und Augendrehpunkt größer als der Abstand zwischen Linse (KL oder IOL) und EP. Eine Änderung des Feldwinkels (Neigung des Hauptstrahls gegenüber der optischen Achse bzw. der Nullblickrichtung) führt beim Brillenglas aufgrund des großen Abstandes auch direkt zu einem großen radialen Abstand des Durchstoßpunktes des Hauptstrahls durch das Brillenglas zur Brillenglasmitte. Bei der IOL oder KL hingegen ist die Auswirkung auf den radialen Abstand des Durchstoßpunktes relativ klein. Beim blickenden Auge wird der Feldwinkel als Blickwinkel bezeichnet und beim statischen Auge als Gesichtsfeldwinkel oder Sehwinkel.

Insbesondere wird ein Einfluss der Korrektion höherer Ordnung auf die niedrigeren Ordnungen berücksichtigt. Damit ist insbesondere keine Vollkorrektion für alle Blickwinkel möglich. Die Korrektion der Abbildungsfehler höherer Ordnung für das zentrale Blicken geradeaus führt insbesondere zu Fehlern zweiter Ordnung (Brechwert und Astigmatimus) für das periper blickende Auge.

Die Koma stellt eine Funktion der dritten Potenz der radialen Komponente r dar. Damit stimmt sie im Wesentlichen mit der ersten Ableitung des Brechwertes überein. Es ist somit sofort klar, dass eine Korrektion der Koma implizit direkt zu einer Änderung des Brechwertes mit Zunahme des Abstandes r führt. Die sphärische Aberration stellt eine Funktion der vierten Potenz des Abstandes r und entspricht somit im Wesentlichen der zweiten Ableitung des Brechwertes.

Vernachlässigt man die Abhängigkeit vom Winkel und betrachtet nur die Abhängigkeit vom radialen Abstand r, so sieht die Aberrationsfunktion W als Potenzreihe vorzugsweise folgendermaßen aus:

$$W(r) = \sum_i \frac{S_i}{i!} r^i = S_1 * r + \frac{S_2}{2} * r^2 + \frac{S_3}{6} * r^3 + \frac{S_4}{24} * r^4 \ldots$$

S1 entspricht dabei im Wesentlichen dem Prisma $P_0$.
S2 entspricht dabei im Wesentlichen dem Brechwert $D_0$.
S3 entspricht dabei im Wesentlichen der Koma $K_0$.
S4 entspricht dabei im Wesentlichen der sphärischen Aberration $SA_0$.

Führt das Auge nun jedoch eine Blickbewegung hinter dem Brillenglas aus und schaut an der Stelle r ungleich 0 durch das Brillenglas, so ergeben sich vorzugsweise im Wesentlichen folgende Änderungen gegenüber dem zentral blickenden Auge:

Prisma:

$$
\begin{aligned}
P(r) &= W'(r) - P_0 \\
&= S_2 * r + S_3 * r^2 / 2 + S_4 * r^3 / 6 \ldots \\
&= D0 * r + K_0 * r^2 / 2 + SA_0 * r^3 / 6 \ldots
\end{aligned}
$$

Für ein sphärisches Brillenglas (Koma und sphärische Aberration = 0) ergibt sich dann die bekannte Prentice Formel $P = r * D_0$ und damit der bekannte lineare Zusammenhang zwischen prismatischer Wirkung und radialem Abstand r. Insbesondere ändert sich bei Vorgabe eines konstanten Brechwertes die prismatische Wirkung linear. Äquivalent ergibt sich bei Vorgabe einer Koma eine lineare Änderung des Brechwertes mit dem Radius.

Brechwert:

$$
\begin{aligned}
D(r) &= W''(r) - D_0 \\
&= S_3 \cdot r + S_4 \cdot r^2/2 \ldots \\
&= K_0 \cdot r + SA_0 \cdot r^2/2 \ldots
\end{aligned}
$$

Bei Vorgabe einer Komakorrektion ändert sich der Brechwert linear und bei Vorgabe einer Korrektur der sphärischen Aberration ändert sich der Brechwert quadratisch als Funktion des radialen Abstandes r.

Insbesondere ist es oft nicht möglich für die Blickrichtung gerade aus Koma und sphärische Aberration zu korrigieren und für das periphere Sehen den Brechwert konstant zu halten. Dieses Problem hat man bei Intraokularlinsen IOL und Kontaktlinsen KL nicht. Das blickende Auge hat bei IOL und KL praktisch keine Auswirkung auf die Abbildung. Eine Änderung des Gesichtfeldwinkels hat, wie oben beschrieben, bei der KL oder IOL einen geringen Einfluss auf den Durchstoßpunkt. Hinzu kommt der starke Visusabfall des Auges außerhalb der Fovea. Schon bei kleinen Sehwinkeln nimmt die Sehschärfe neben der Fovea rapide ab, wodurch die Brechwertaberrationen nicht wahrgenommen werden.

Bei Blickbewegungen beim Brillenglas haben jedoch, die durch die Korrektion höherer Ordnung eingeführten Brechwertfehler peripher eine Auswirkung auf das Sehen, da die Abbildung in die Fovea stattfindet. Beim statischen Auge ist die Änderung des Brechwertes und Astigmatismus bei Zunahme des Gesichtsfeldwinkels zwar größer als bei IOL und KL, aber auch hier ist der Einfluss dieser Abbildungsfehler aufgrund des starken Visusabfalls außerhalb der Fovea eher gering.

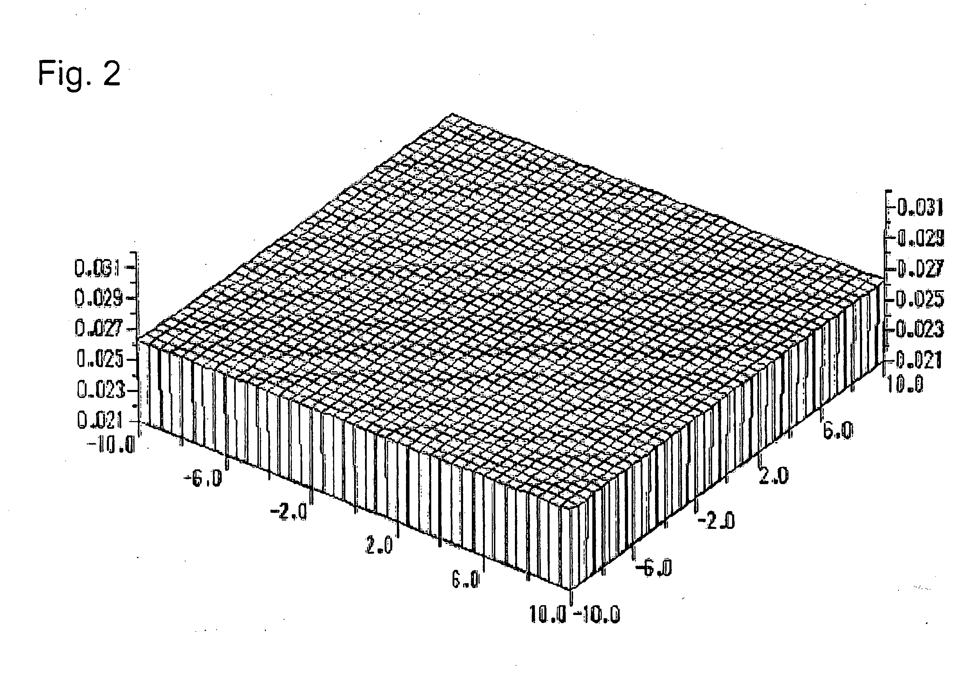

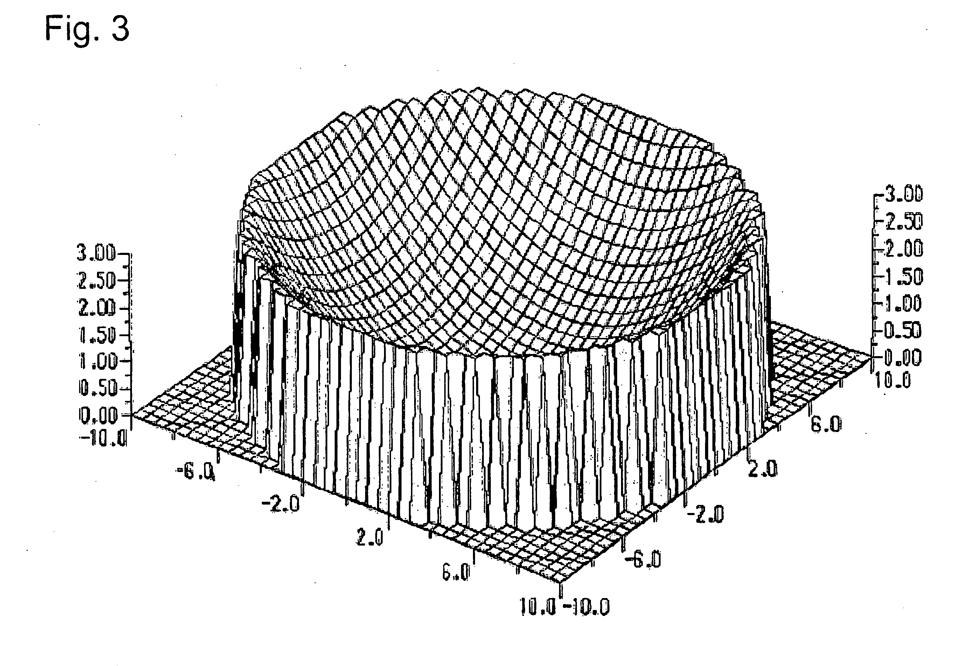

In Fig. 2 ist ein Brillenglas dargestellt, das in allen Durchblickpunkten einer relativ geringe sph. Aberration von 0,025 Mikrometer aufweist. Damit wird vorzugsweise eine vollständige Korrektion einer entsprechenden Aberration erreicht. Fig. 2 und 3 zeigen einen Bereich des Brillenglases von $|x|$, $|y| \leq 10$ mm. In Fig. 3 ist der sphärische Fehler dieses Brillenglas dargestellt. Bis $|x|$, $|y| = 10$ mm hat man schon einen sph. Fehler von 3 dpt. Damit ist das Brillenglas in der Peripherie nicht nutzbar. Selbst die Korrektion einer schwachen sph. Aberration führt zu einem unbrauchbaren Brillenglas. Eine vollständige Korrektur der Abbildungsfehler höherer Ordnung ist somit nicht sinnvoll, da damit die Abbildungsfehler niedriger Ordnung unverhältnismäßig verschlechtert werden.

Um die Abbildungsfehler niedriger Ordnung nicht unverhältnismäßig zu verschlechtern, wird vorzugsweise nur eine Teilkorrektur der Abbildungsfehler höherer Ordnung vorgenommen. In einer bevorzugten Ausführungsform der vorliegenden Erfindung wird dabei die Aberrationsfunktion der Pupille auf das Brillenglas transformiert, indem man den Pupillenradius durch den Brillenglasradius ersetzt. Dadurch wird der Aberrationskoeffizient c jeder Aberration herunterskaliert. Der Vorteil dieser Methode ist, dass an jeder Stelle des Brillenglas r/r$_{Brillenglas}$ die Aberrationsfunktion den gleichen Wert wie in der Pupille r/r$_{Pupille}$ hat.

$$
\Delta z(r, \vartheta) = \sum_i c_i Z_i \left( \frac{r}{r_{Pupille}}, \vartheta \right)
$$

$$
\Delta z(r, \vartheta) = \sum_i c_i Z_i \left( \frac{r}{r_{Brillenglas}}, \vartheta \right)
$$

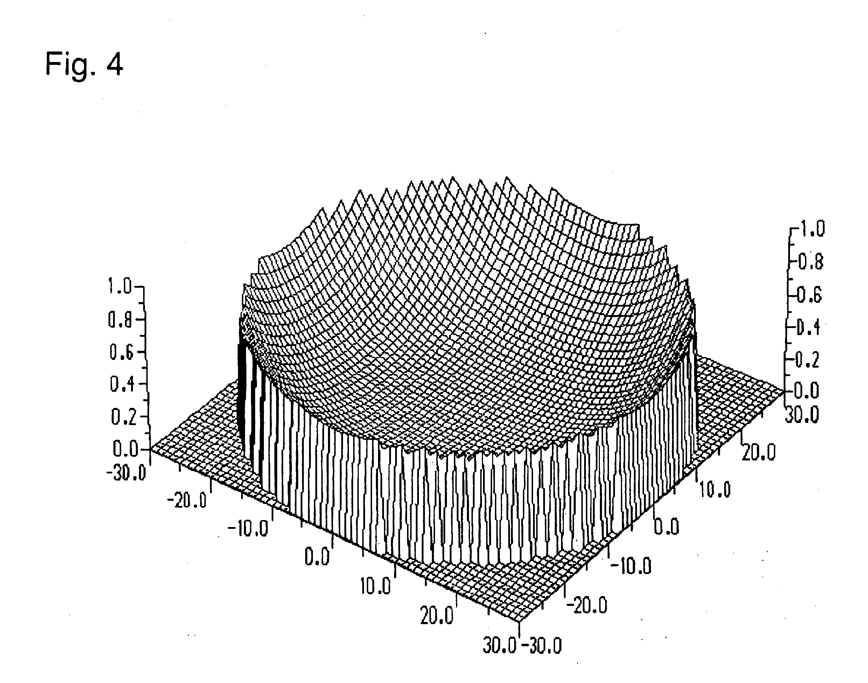

Mit dieser Methode wird vorzugsweise, wie in Fig. 4 zu erkennen, durch die Korrektur der höheren Ordnungen die Korrektur der niedrigen Ordnungen nicht unverhältnismäßig verschlechtert. In Fig. 4 ist der Astigmatismus eines Brillenglases dargestellt bei dem die sphärische Aberration von c = 0,5 für einen Brillenglasdurchmesser von 40 mm ($r_{Brillenglas}$ = 20 mm) korrigiert wurde. Man erkennt, dass selbst am Rand bei r = 30 mm der astigmatische Fehler weniger als 0,5 dpt beträgt.

Allerdings werden dadurch die Aberrationen höherer Ordnung nicht vollständig korrigiert. Wählt man für die Korrekturfunktion als Normierungsradius den Radius der Pupille erzielt man die volle Korrektur. Vorzugsweise wird nun geeigneter bzw. gewünschter Wert r (Normierungsradius) der zwischen dem Radius der Pupille und dem Radius des Brillenglas liegt, für die Transformation bzw. Skalierung gewählt. So kann die Skalierung beliebig eingestellt werden. Vorzugsweise wird somit ein Kompromiss bzgl. der Korrektion der Abbildungsfehler unterschiedlicher Ordnungen gewählt. Vorzugsweise wird der Kompromiss dadurch gefunden, dass für jede Blickrichtung in einer Zielfunktion die einzelnen Abbildungsfehler bewertet bzw. gewichtet werden. In einer bevorzugten Ausführungsform wird eine Zielfunktion F der folgenden Form verwendet:

$$F = \min \sum_i g_A(i) * (A_{Ist}(i) - A_{Soll}(i))^2 + g_D(i) * (D_{Ist}(i) - D_{Soll}(i))^2$$

wobei

$g_A$(i) = Lokales Gewicht des Astigmatismus an der i-ten Bewertungsstelle;
$A_{ist}$ (i) = Tatsächlicher lokaler Astigmatismus an der i-ten Bewertungsstelle;
$A_{Soll}$ (i) = Geforderter lokalerAstigmatismus an der i-ten Bewertungsstelle;

$G_D$(i) = Lokales Gewicht des Brechwertes an der i-ten Bewertungsstelle;
$D_{ist}$ (i) = Tatsächlicher lokaler Brechwert an der i-ten Bewertungsstelle; und
$D_{Soll}$ (i) = Geforderter lokaler Brechwert an der i-ten Bewertungsstelle.

Als Möglichkeit der Korrektur der Abbildungsfehler höherer Ordnung wird insbesondere vorgeschlagen, die Optimierung über eine Zielfunktion vorzunehmen, wobei in der Zielfunktion die Abbildungsfehler höherer Ordnung in geeigneter Weise berücksichtigt werden. Wie oben schon beschrieben, unterscheidet sich ein Brillenglas von anderen Lösungen aus der technischen Optik dadurch, dass die Aperturblende gegenüber dem Optischen System nicht ortsfest ist. Vorzugsweise werden daher für viele Blickrichtungen Wellenfronten berechnen und ausgewertet.

Vorzugsweise werden die Aberrationen höherer Ordnung in der Zielfunktion berücksichtigt bzw. in die Zielfunktion aufgenommen.

In einer bevorzugten Ausführungsform werden die Aberrationen höherer Ordnung (z.B. Koma, Trefoil, sph. Aberration) einzeln zusätzlich zum Astigmatismus und Brechwert aufgenommen und gewichtet (äquivalent zum Astigmatismus und Brechwert).

In einer weiteren bevorzugten Ausführungsform werden Werte von RMS (Route Mean Square) der Wellenaberrationsfunktion, die Pointspreadfunction (PSF), die Modulationsübertragungsfunktion (MTF) oder äquivalente Kriterien zusätzlich zum Astigmatismus und Brechwert oder als alleinige Einträge in die Zielfunktion aufgenommen.

In einer bevorzugten Ausführungsform umfasst die Optimierung eines Brillenglases ein Wavetracing-Verfahren. Insbesondere werden lokale Wellenfronten bestimmt und die Abbildungsfehler höherer Ordnung auf Basis von lokalen Ableitungen der ankommenden Wellenfront und der brechenden Fläche berechnet.

Vorzugsweise wird jedes Brillenglas individuell online optimiert. Das Verfahren zur Berechnung der Aberrationen höherer Ordnung nach dem Stand der Technik, wie es beispielsweise in DE 102 50 093 beschrieben ist, beruht auf Raytracing. Der Nachteil von Raytracing besteht in der langen Rechenzeit. Um ein Brillenglas aber mittels einer Zielfunktion online zu optimieren ist es vorteilhaft, ein schnelles Berechnungsverfahren bereitzustellen.

Dazu werden vorzugsweise neben Brechwert und Astigmatismus aus den lokalen Eigenschaften der Wellenfront auch die Aberrationen höherer Ordnung bestimmt. Vorzugsweise wird die austretende Wellenfront mit Zernikepolynomen und/oder einer Taylorreihe und/oder einem anderen geeigneten Funktionensatz entwickelt bzw. dargestellt. Vorzugsweise wird die lokale Eigenschaft einer austretenden Wellenfront direkt oder indirekt aus den lokalen Eigenschaften der auftreffenden Wellenfront und der brechenden Fläche ermittelt.

Mit Hilfe dieser Methode braucht für jede Blickrichtung nur ein Strahl nämlich der Hauptstrahl berechnet zu werden. Die Strahldurchrechnung (Raytracing) ist deshalb so zeitaufwendig, da es sich um iteratives Verfahren handelt, bei dem jeweils der Schnittpunkt mit der Rückfläche, der Vorderfläche und der Pupillenebene bestimmt werden muss. Möchte man z.B. die Abbildungsfehler 3. und 4. Ordnung berechnen, braucht man mindestens schon 12 Strahlen.

Ein weiterer Vorteil der lokalen Wellenfrontdurchrechnung (Wavetracing) liegt in der lokalen Begrenzung der Durchrechnung. Da die Eigenschaften aus den lokalen Ableitungen berechnet werden, geht im Limes auch nur ein unendlich kleiner Bereich des Brillenglases ein, der zur Berechnung verwendet wird. Damit wird erreicht, dass die Jakobimatrix sehr dünn besetzt ist, wodurch das Optimierungsproblem verkleinert und deutlich schneller gelöst werden kann.

Dies ist insbesondere dann von Vorteil, wenn zur Flächendarstellung B-Splines verwendet werden, da bei diesen Splines Koeffizienten die Fläche jeweils nur lokal beeinflussen. Eine Folge in der Verwendung von Wavetracing ist, dass im Prinzip der Gauß'sche Brechwert berechnet wird, also der "fadenförmige" Bereich um den Hauptstrahl. Es ist nur bedingt möglich von diesem zentralen Brechwert auf den durchschnittlichen Brechwert über die ganze Pupille zuschließen. Äquivalent verhält es sich ebenso mit den höheren Aberrationen. Von Vorteil ist hierbei allerdings, dass die Pupille des menschlichen Auges klein ist und zusätzlich noch eine sensorische Pupille (Gewichtungsfunktion) der körperlichen Blende überlagert ist. Dieses Phänomen wird als Stiles-Crawford-Effekt bezeichnet und beschreibt die Empfindlichkeit in Abhängigkeit vom Öffnungswinkel.

In einer einfachen Ausführungsform der vorliegenden Erfindung wird eine ungewichtete Anpassung von beispielsweise Zernike-Polynomen an die Aberrationsfunktion durchgeführt. In einer bevorzugten Ausführungsform wird aber auch die sensorische Blende berücksichtigt. Dabei wird besonders bevorzugt zur Berücksichtigung des Stiles-Crawford-Effekles eine Gewichtsfunktion eingeführt, die die Überbewertung des Pupillenrandes unterdrückt. Bezieht man diese Gewichtsfunktion in das Orthogonalisungsschema für Zernike-Polynome ein, dann erhält man einen neuen Satz von Polynomen, die die physiologische Realität besser abbilden.

Vorzugsweise wird die Aberrationen unter Berücksichtigung einer insbesondere individuellen Pupillengrößen bzw. in Abhängigkeit von einer insbesondere individuellen Pupillengrößen ermittelt und/oder korrigiert. Insbesondere wird berücksichtigt, dass das gesamte Ausmaß der Aberrationen höherer Ordnung mit zunehmender Pupillengröße ansteigt. Demnach ist das Gesamtausmaß der messbaren Aberration abhängig von der aktuellen Pupillengröße während des Messvorgangs. Außerdem bringt die Korrektion von Aberrationen mit großer Pupille mehr Verbesserung des optischen Eindrucks als die Korrektion der Aberrationen bei kleiner Pupille. In einer bevorzugten Ausführungsform werden sowohl Pupillengrößen berücksichtigt, bei denen sich die Aberrationen auswirken als auch solche, die häufig vorkommen. Die Pupillengröße ist abhängig von vielen Faktoren (z.B. Umgebungshelligkeit, vegetatives Nervensystem und Alter, s. Abbildung ) und interindividuell verschieden. Generell gilt eine Altersabgängigkeit für die Pupillengröße. Die interindividuelle Variation beträgt altersunabhängig ca. 4 mm.

Ein Zusammenspiel bzw. eine Korrelation von Akkommodation, Konvergenz und Nahmiosis (Nahtriade) wird von physiologischen Begebenheiten beeinflusst (z.B. altersabhängige Veränderung der Nahtriade). Dementsprechend haben Konvergenz und Akkommodation auch Einfluß auf die Pupillengröße durch das Zusammenspiel von Akkommodation, Konvergenz und Nahmiosis. Dementsprechend wird vorzugsweise individuell für die Korrektion der Aberrationen höherer Ordnung ein geeigneter Pupillendurchmesser ermittelt bzw. ausgewählt und beim Entwerfen bzw. Optimieren des Brillenglases berücksichtigt. Vorzugsweise werden beim Ermitteln bzw. Auswählen des geeigneten Pupillendurchmessers einer oder mehrere der folgenden Kriterien berücksichtigt:

    i. das Alter;
    ii. mehrere Messergebnisse der Pupillengröße bei verschiedenenen Helligkeiten;
    iii. mehrere Messergebnisse der Pupillengröße bei verschiedenenen Tagesverfassungen (Einfluß des vegetat. Nervensystems);
    iv. typische Beleuchtung, bei der die Brille angewendet werden soll, z.B. nächtliches Autofahren;
    v. typische Entfernung, bei der die Brille angewendet werden soll (Nahtriade, unter weiterer Berücksichtigung von Größen, die die Nahtriade verändern)

Vorzugsweise wird bei der Korrektion, insbesondere bei der bevorzugten Anwendung der Korrektion in der Nähe, eine Beeinflussung bzw. Veränderung der Aberration durch Akkommodation berücksichtigt. Vorzugsweise wird eine Veränderung der Aberrationen für spezielle Blickwinkel an den Durchblickspunkten berücksichtigt.

Da ein gewisses Maß an monochromatischen Aberrationen von Vorteil sein kann für das Sehen (z.B. zur Steuerung der Akkommodation oder im Falle von Astigmatismus für die Sehschärfe), wird vorzugsweise nicht jede, von einem Messgerät ermittelte Aberrationen voll korrigiert. Vielmehr wird vorzugsweise berücksichtigt, welche Verträglichkeit zu erwarten ist bzw. welche Aberrationen wie stark auskorrigiert werden sollen und wie verschiedene Aberrationen mit anderen interagieren. Vorzugsweise wird durch Berücksichtigung von den genannten Interaktionen bzw. Reaktionen der größte individuellen Gewinn für die visuelle Performance erlangt.

Vorzugsweise wird dies zumindest teilweise erreicht durch

- Simulation der Korrektion von Abbildungsfehlern höherer Ordnung; und/oder
- subjektive Bewertung der Korrektion von Aberrationen höherer Ordnung, deren Ausmaße voll oder teilweise korrigiert werden; und/oder
- subjektive Bewertung der Interaktion von Korrektionen von verschiedenen Aberrationen; und/oder
- individuelle Beurteilung der Sehqualität, des Sehkomforts bei Simulation der Korrektion von Aberrrationen.

Vorzugsweise wird die Korrektion der Aberrationen höherer Ordnungen spontan und/oder nach Adaptation subjektiv bewertet. Physiologische Erkenntnisse über zu erwartende Verträglichkeit / Vorteile durch die Korrektion der Aberrationen höherer Ordnung werden vorzugsweise in einer Datenbank gesammelt, mit deren Hilfe es dann möglich ist, sowohl Voraussagen zu treffen über spontane Verträglichkeit, als auch über die nach Adaptation.

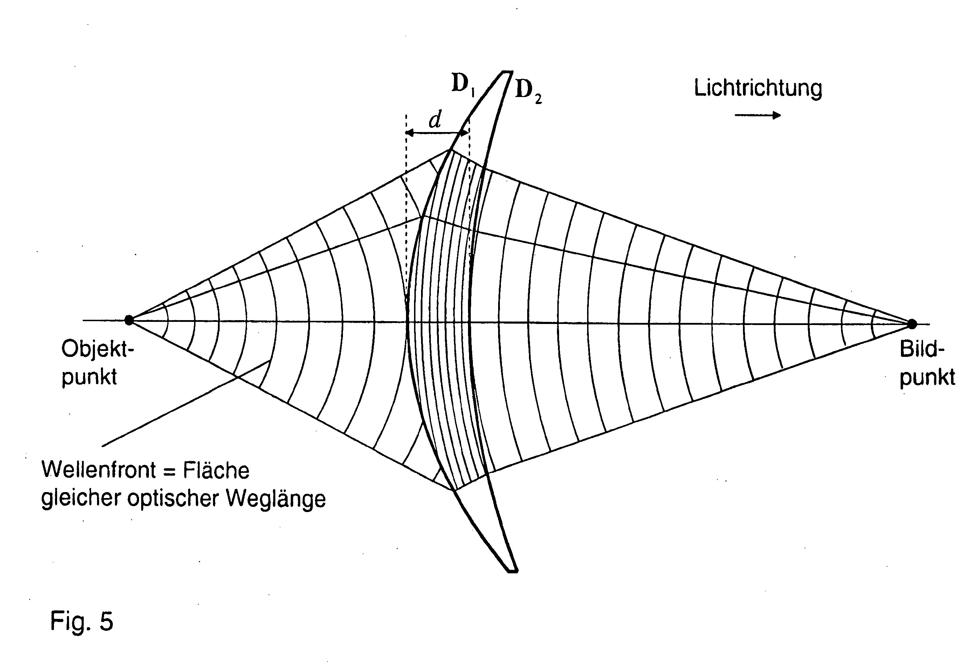

Die geometrische Optik befasst sich insbesondere mit dem Gebiet der Optik, welches sich dadurch auszeichnet, dass die Wellenlänge (Grenzübergang $\lambda\text{-} > 0$) vernachlässigt wird. Es wird angenommen, dass das Licht aus Strahlen besteht. Ein Lichtstrahl ist dabei insbesondere ein gedachtes unendlich kleines Lichtbündel, dessen Richtung durch die Normale der Welle bzw. Wellenfront bestimmt ist. Der Satz von Malus-Dupin besagt nun, dass ein Lichtstrahl auch nach beliebig vielen Brechungen oder Reflexionen noch senkrecht auf der Fläche gleicher optischer Weglänge steht. Diese Fläche gleicher optischer Weglänge wird als die Wellenfront bezeichnet. Das Fermat'sche Prinzip des kürzesten Lichtweges besagt, dass die optische Weglänge $\int_{P_0}^{P_1} n\,ds$ eines Strahles zwischen zwei Punkten $P_0$, $P_1$ kürzer ist als jede andere Verbindungskurve. Hieraus lassen sich vorzugsweise das Brechungs- und Reflexionsgesetz und der Zusammenhang ableiten, dass bei einer perfekten Abbildung, wie sie insbesondere in Fig. 5 schematisch veranschaulicht ist, die optische Weglänge vom Objektpunkt zum Bildpunkt für alle Strahlen gleich ist. Fig. 5 zeigt dabei die Ausbreitung von Wellenfronten von einem Objektpunkt zu einem Bildpunkt durch eine optische Linse, insbesondere ein bevorzugtes Brillenglas dar. Insbesondere zeigt Fig. 5 eine Abbildung eines Objektpunktes in einen Bildpunkt an einer Linse mit zwei Flächen mit den Brechwerten D1, D2 und der Mittendicke d. Die kreisförmigen Linien stellen einzelne Wellenfronten dar.

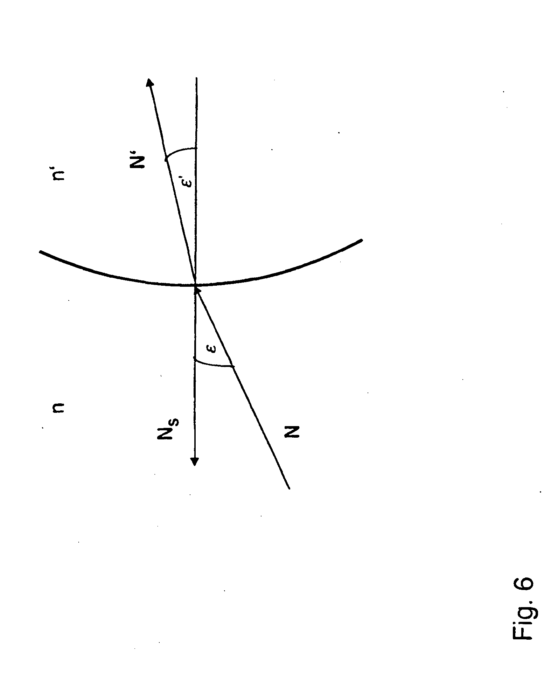

Das Brechungsgesetz nach Snellius lautet $n'\sin\varepsilon' = n\sin\varepsilon$ und wird insbesondere in Fig. 6 verdeutlicht. Vorzugsweise wird dies folgendermaßen formuliert:

$$n'\left|\vec{N}\times\vec{N}_s\right| = n\left|\vec{N}\times\vec{N}_s\right|.$$

Vorzugsweise wird eine Transformationen zu einer vektoriellen Darstellung des Brechungsgesetzes folgendermaßen durchgeführt:

$$\vec{N}'(\vec{N},\vec{N}_s) = \mu\vec{N} + \gamma(\vec{N},\vec{N}_s)\vec{N}_s$$

$$\gamma(\vec{N},\vec{N}_s) = -\mu\vec{N}\cdot\vec{N}_s + \sqrt{1-\mu^2(1-(\vec{N}\cdot\vec{N}_s)^2}$$

$$\mu = \frac{n}{n'}$$

Diese Darstellung beschreibt insbesondere den Richtungsvektor des ausfallenden Strahls als Funktion der Richtung des einfallenden Strahles und der Flächennormale der brechenden Fläche. Vorzugsweise umfasst das Bestimmen bzw. Festlegen einer Aberrationsfunktion, insbesondere der Aberrationsfunktion des zumindest einen Auges des Brillenträgers und/oder der Aberrationsfunktion des Brillenglases ein Entwickeln der Aberrationsfunktion in einer Potenzreihe in Abhängigkeit von Parametern h', r und $\theta$ derart, dass gilt:

$$W(h',r,\theta) = \sum_{l=0}^{\infty}\sum_{n=l}^{\infty}\sum_{m=0}^{n} a_{2l+m,n,m}\, h'^{2l+m}\, r^n \cos^m\theta,$$

wobei h' den Abstand von der optischen Achse in der Bildebene, r den Abstand von der optischen Achse in der Pupillenebene und $\theta$ den Winkel zwischen der x-Achse und der Strecke r in der Pupillenebene darstellt bzw. repräsentiert.

Die Ordnung einer Aberration wird vorzugsweise mit i = 2l + m + n bezeichnet und ist insbesondere gerade. Die Fehler mit i = 4 werden vorzugsweise als Primäre oder Seidelsche Abbildungsfehler bezeichnet.

| l | n | m | 2l+m | Aberrationsterm | Abbildungsfehler |
|---|---|---|---|---|---|
| 0 | 4 | 0 | 0 | $4\,a_{0,4,0}r^4$ | Sphärische Aberration |
| 0 | 3 | 1 | 1 | $a_{1,3,1}h'r^3\cos\theta$ | Koma |
| 0 | 2 | 2 | 2 | $a_{2,2,2}h'^2r^2\cos\theta$ | Astigmatismus |
| 1 | 2 | 0 | 2 | $a_{2,2,0}h'^2r^2$ | Bildfeldkrümmung |
| 1 | 1 | 1 | 3 | $a_{3,1,1}h'^3 r\cos\theta$ | Verzeichnung |

Die Abbildungsfehler mit i = 6 werden als sekundäre oder Schwarzschildsche Abbildungsfehler bezeichnet.

| l | n | m | 2l+m | Aberrationsterm | Abbildungs-Fehler |
|---|---|---|---|---|---|
| 0 | 6 | 0 | 0 | $a_{0,6,0}r^6$ | Sekundäre Sphärische Aberration |
| 0 | 5 | 1 | 1 | $a_{1,5,1}h'r^5 \cos \theta$ | Sekundäre Koma |
| 0 | 4 | .2 | 2 | $a_{2,4,2}h'^2 r^4 \cos \theta$ | Sekundärer Astigmatismus |
| 0 | 3 | 3 | 3 | $a_{3,3,3} h'^3 r^3 \cos^3 \cos \theta$ | Pfeilfehler |
| 1 | 4 | 0 | 2 | $a_{2,4,0}h'^2 r^4$ | Laterale Sphärische Aberration |
| 1 | 3 | 1 | 3 | $a_{3,3,1}h'^3 r^3 \cos \theta$ | Laterale Koma |
| 1 | 2 | 2 | 4 | $a_{4,2,2} h'^4 r^2 \cos^2 \theta$ | Lateraler Astigmatismus |
| 2 | 2 | 0 | 4 | $a_{4,2,0}h'^4 r^2$ | Laterale Bildfeldwölbung |
| 2 | 1 | 1 | 5 | $a_{5,1,1}h'^5 r \cos \theta$ | Laterale Verzeichnung |

Entsprechend werden die Abbildungsfehler mit i = 8 als tertiäre Abbildungsfehler bezeichnet.

In einer bevorzugten Ausführungsform umfasst eine in einem Verfahren zum Entwerfen bzw. Herstellen eines Brillenglases berücksichtige Aberration höherer Ordnung einen oder mehrere der oben genannten primären und/oder sekundären und/oder teriären Abbildungsfehler. Für die Abbildung eines einzelnen Objektpunktes wird die Potenzreihe vorzugsweise ohne explizite Abhängigkeit von h' dargestellt durch

$$W(r,\theta) = \sum_{n=0}^{\infty} \sum_{m=0}^{n} a_{n,m} r^n \cos^m \theta$$

und stellt dabei insbesondere eine Parametrisierung der Wellenfront dar.

Die zugehörigen primären und sekundären Abbildungsfehler bis zur sechsten Ordnung n werden in der folgenden Tabelle wiedergegeben:

| N | m | Aberrationsterm | Abbildungs-Fehler |
|---|---|---|---|
| 1 | 1 | $a_{1,1} r \cos \theta$ | Verzeichnung |
| 2 | 0 | $2 a_{2,0} r^2$ | Brechwert |
| 2 | 2 | $a_{2,2} r^2 \cos^2 \theta$ | Astigmatismus |
| 3 | 1 | $a_{3,1} r^3 \cos \theta$ | Koma |
| 3 | 3 | $a_{3,3} r^3 \cos^3 \theta$ | Pfeilfehler |
| 4 | 0 | $a_{4,0} r^4$ | Sphärische Aberration |
| 4 | 2 | $a_{4,2} r^4 \cos^2 \theta$ | Sekundärer Astigmatismus |
| 5 | 1 | $a_{5,1} r^5 \cos \theta$ | Sekundäre Koma |
| 6 | 0 | $a_{6,0} r^6$ | Sekundäre Sphärische Aberration |

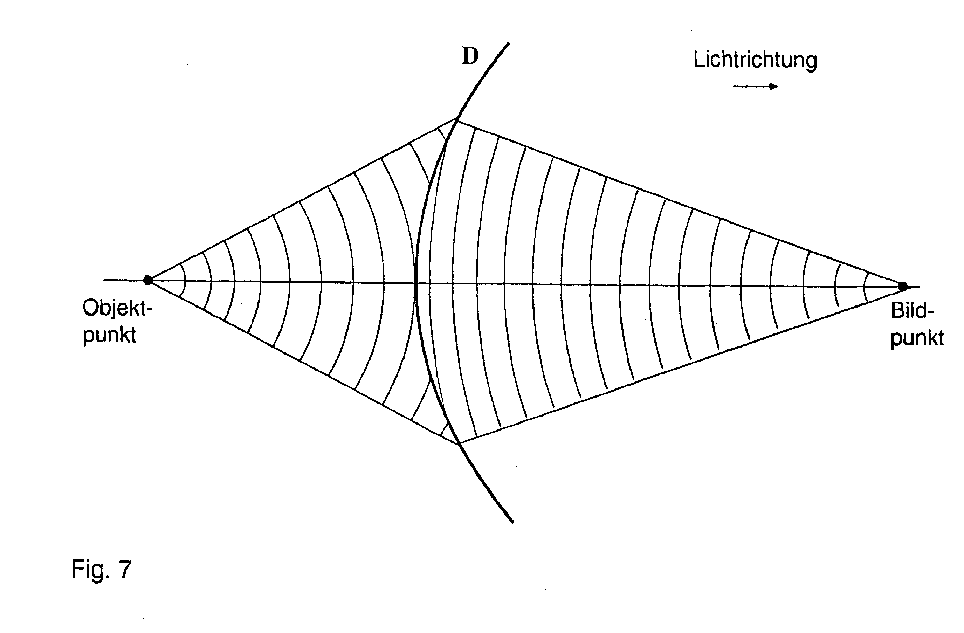

Betrachtet man nun ein infinitesimales Gebiet um die optische Achse (r->0), so gelangt man zur Gaussschen Optik (oder paraxialen Optik). Man erhält für die Abbildungsfehler 2. Ordnung (Brechwert) bei der Brechung einer sphärischen Wellenfront an einer sphärischen Fläche die Schnittweitengleichung oder Vergenzgleichung (Fig. 7). Fig. 7 veranschaulicht die Brechung einer sphärischen Wellenfront an einer sphärischen Fläche. Hierbei trifft eine sphärische Wellenfront insbesondere senkrecht auf eine vorzugsweise zumindest lokal sphärische Fläche (D). Vorzugsweise gilt dabei als Schnittweitengleichung:

$$S' = S + D$$

$$mit \quad S = \frac{n}{s}$$

$$D = \frac{n'-n}{r} = (n'-n)K$$

$$S' = \frac{n'}{s'}$$

Hierbei ist insbesondere s die objektseitige Schnittweite (Abstand vom Objektpunkt bis zur brechenden Fläche) und entspricht dem Krümmungsradius der ankommenden Wellenfront. s' ist insbesondere die bildseitige Schnittweite (Abstand vom Bildpunkt bis zur brechenden Fläche) und entspricht dem Krümmungsradius der austretenden Wellenfront. r ist der Krümmungsradius der brechenden Fläche (Abstand vom Mittelpunkt der brechenden Fläche bis zur brechenden Fläche). n ist Brechzahl des Mediums auf der Objektseite. n' ist die Brechzahl des Mediums auf der Bildseite.

Vorzugsweise wird diese Darstellung auf den Fall eines schrägen Auftreffens der Wellenfront auf einer astigmatischen Fläche erweitert. Eine sphärische Wellenfront trifft schräg auf eine sphärische Fläche oder eine astigmatische Fläche, bei der eine Hauptkrümmungsrichtung mit der Brechungsebene zusammenfällt. Vorzugsweise erhält man dabei die Gleichungen:

$$S'_x = S + D_x \frac{n'\cos\varepsilon' - n\cos\varepsilon}{n'-n}$$

$$S'_y \cos^2\varepsilon' = S\cos^2\varepsilon + D_y \frac{n'\cos\varepsilon' - n\cos\varepsilon}{n'-n}$$

mit $\varepsilon$ = Einfallswinkel, $\varepsilon'$ = Ausfallswinkel

Diese Gleichungen werden auch "Coddington-Gleichung" genannt. $S'_y, D_y$ entsprechen, vorzugsweise analog zur Schnittweitengleichung, den Kehrwerten der Abstände in der Brechungsebene und $S'_x, D_x$ entsprechend senkrecht zur Brechungsebene.

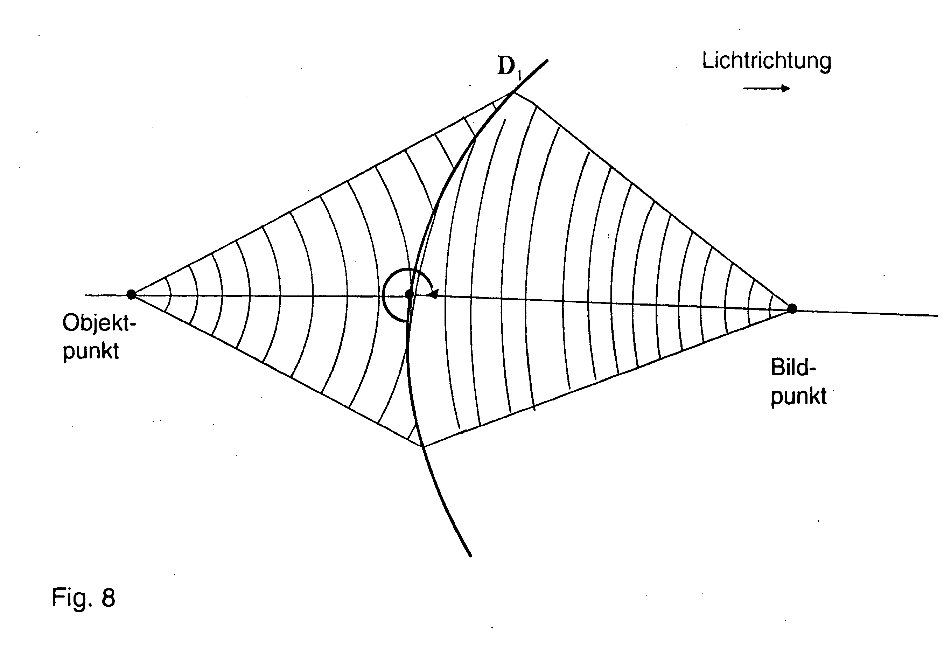

Der komplexeste Fall 2. Ordnung ist derjenige, wenn eine astigmatische Wellenfront schräg auf eine astigmatische Fläche trifft, bei der weder die Hauptkrümmungsrichtungen der Fläche und der ankommenden Wellenfront übereinstimmen, noch diese mit der Brechungsebene übereinstimmen. Dieser Fall wird in Fig. 8 veranschaulicht. So veranschaulicht Fig. 8 insbesondere einen Übergang auf den schrägen Einfall und das Verlassen der Rotationssymmetrie. Dies führt insbesondere zur allgemeinen Coddington-Gleichung:

$$C'S'C' = CSC + \frac{n'\cos\varepsilon' - n\cos\varepsilon}{n'-n} D$$

$$S = \begin{pmatrix} S_{xx} & S_{xy} \\ S_{xy} & S_{yy} \end{pmatrix} = \begin{pmatrix} (S + \frac{z}{2}) - \frac{z}{2}\cos 2\alpha & -\frac{z}{2}\sin 2\alpha \\ -\frac{z}{2}\sin 2\alpha & (S + \frac{z}{2}) + \frac{z}{2}\cos 2\alpha \end{pmatrix}$$

$$C = \begin{pmatrix} 1 & 0 \\ 0 & \cos\varepsilon \end{pmatrix} \quad C' = \begin{pmatrix} 1 & 0 \\ 0 & \cos\varepsilon' \end{pmatrix}$$

und S' entsprechend.

Lokale Eigenschaften sind exakt für das lokale differentielle Gebiet und eine gute Approximation für ein kleines Gebiet insbesondere wenn die höheren Ableitungen klein sind. Vorzugsweise werden Powervektoren benutzt, um eine sphärozylindrische Wirkung einer brechenden Fläche, insbesondere der Vorder- und/oder Rückfläche des Brillenglases, oder der Wellenfront zu beschreiben. Zur Darstellung von Powervektoren wird insbesondere auf Harris W. "Power Vectors Versus Power Matrices, and the Mathematical Nature of Dioptric Power", OWS 11/2007 verwiesen.

Als Basiskomponenten des Vektors werden vorzugsweise die Normalenkrümmung in x-Richtung $\kappa_N$, die geodätische Windung in x-Richtung $\tau$ und die Normalenkrümmung in y-Richtung $\kappa_N$ verwendet. Der Vektor mit den entsprechenden sphäro-zylindrischen Komponenten wird dann vorzugsweise dargestellt durch:

$$\begin{pmatrix} S_{xx} \\ S_{xy} \\ S_{yy} \end{pmatrix} = \begin{pmatrix} (S + \frac{z}{2}) - \frac{z}{2}\cos 2\alpha \\ -\frac{z}{2}\sin 2\alpha \\ (S + \frac{z}{2}) + \frac{z}{2}\cos 2\alpha \end{pmatrix}$$

Mit dieser Schreibweise lässt sich die Coddington-Gleichung sehr einfach schreiben:

$$C'\bar{S}' = C\bar{S} + \bar{D}\frac{n'\cos\varepsilon' - n\cos\varepsilon}{n' - n}$$

$$\bar{S}' = \begin{pmatrix} S'_{xx} \\ S'_{xy} \\ S'_{yy} \end{pmatrix} \quad \bar{S} = \begin{pmatrix} S_{xx} \\ S_{xy} \\ S_{yy} \end{pmatrix} \quad \bar{D} = \begin{pmatrix} D_{xx} \\ D_{xy} \\ D_{yy} \end{pmatrix}$$

$$C' = \begin{pmatrix} 1 & 0 & 0 \\ 0 & \cos\varepsilon' & 0 \\ 0 & 0 & \cos^2\varepsilon' \end{pmatrix} \quad C = \begin{pmatrix} 1 & 0 & 0 \\ 0 & \cos\varepsilon & 0 \\ 0 & 0 & \cos^2\varepsilon \end{pmatrix}$$

Im Folgenden werden zwei verschiedene, bevorzugte Verfahren zur Beschreibung bzw. Ermittlung einer insbesondere von einem Objektpunkt ankommenden Wellenfront, einer brechenden Fläche, insbesondere der Vorder- und/oder Rückfläche des Brillenglases, und der austretenden Wellenfront beschrieben. Vorzugsweise umfasst das erfindungsgemäße Verfahren zum Entwerfen bzw. Herstellen eines Brillenglases in einer bevorzugten Ausführungsform eines oder mehrere dieser bevorzugten Verfahren zur Beschreibung bzw. Ermittlung einer Wellenfront bzw. zumindest einer Fläche des Brillenglases.

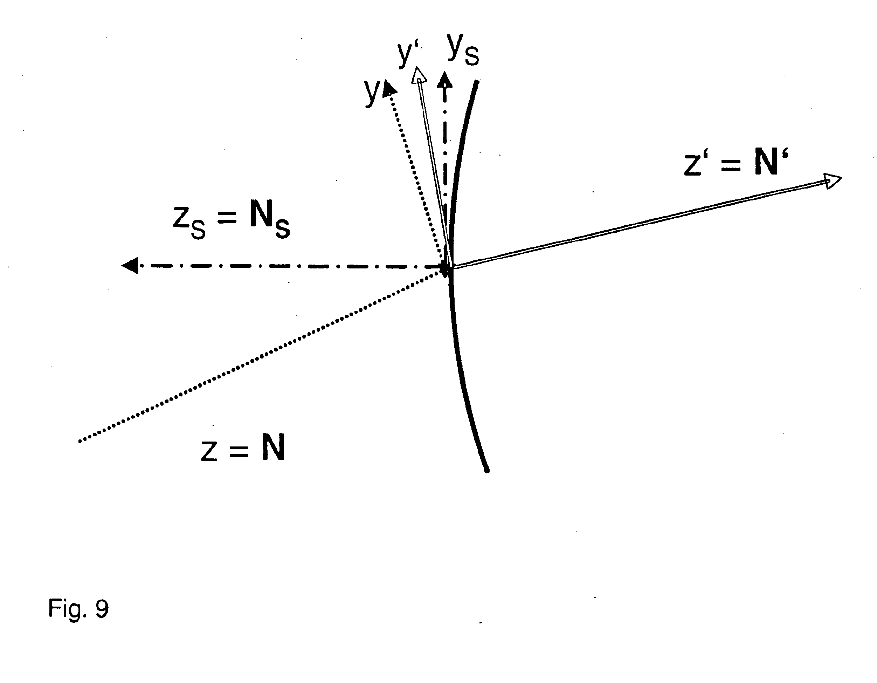

Eine erste dieser bevorzugten Ausführungsformen umfasst ein Festlegen von drei lokalen kartesischen Koordinatensystemen. Dabei wird ein erstes Koordinatensystem (x,y,z) einer einfallenden Wellenfront, ein zweites Koordinatensystem $(x_s,y_s,z_s)$ der brechende Fläche und ein drittes Koordinatensystem (x',y',z') der austretende bzw. auslaufenden Wellenfront zugeordnet. Fig. 9 zeigt die drei lokalen Koordinatensysteme der Fläche, der einfallenden und der austretenden Wellenfront gemäß einer bevorzugten Ausführungsform. Die z-Achse (bzw. $z_s$-Achse, bzw. z'-Achse) entspricht jeweils der Richtung der Normalen von einfallender bzw. austretender Wellenfront (bzw. dem ein- und ausfallendem Hauptstrahl) der brechenden Fläche. Die x-Achse (bzw. $x_s$- bzw. x'-Achse) steht senkrecht auf der Brechungsebene (Zeichenebene in Fig.9) und ist damit in allen Koordinatensystemen identisch. Die y-Achse (bzw. $y_s$- bzw. y'-Achse) steht senkrecht auf x- und z-Achse (bzw. $x_s$- und $z_s$-Achse, bzw. x'- und z'-Achse) und liegt damit in der Brechungsebene.

Vorzugsweise wird eine Koordinatentransformation durchgeführt, um von einem dieser bevorzugten Koordinatensysteme in ein anderes zu wechseln, und umgekehrt. Die Koordinatentransformation stellt dabei vorzugsweise eine Rotation um die x-Achse um den Einfalls- bzw. Ausfallswinkel dar.

$$Rot(\varepsilon) = \begin{bmatrix} 1 & 0 & 0 \\ 0 & \cos\varepsilon & -\sin\varepsilon \\ 0 & \sin\varepsilon & \cos\varepsilon \end{bmatrix} \quad Rot(\varepsilon') = \begin{bmatrix} 1 & 0 & 0 \\ 0 & \cos\varepsilon' & -\sin\varepsilon' \\ 0 & \sin\varepsilon' & \cos\varepsilon' \end{bmatrix}$$

Weiterhin besteht zwischen der Koordinate y der auftreffenden Wellenfront, der Koordinate $y_s$ der brechenden Fläche und der Koordinate y' der austretenden Wellenfront insbesondere folgender Zusammenhang:

$$y(y_s) = y_s \cos\varepsilon$$

$$y'(y_s) = y_s \cos\varepsilon'$$

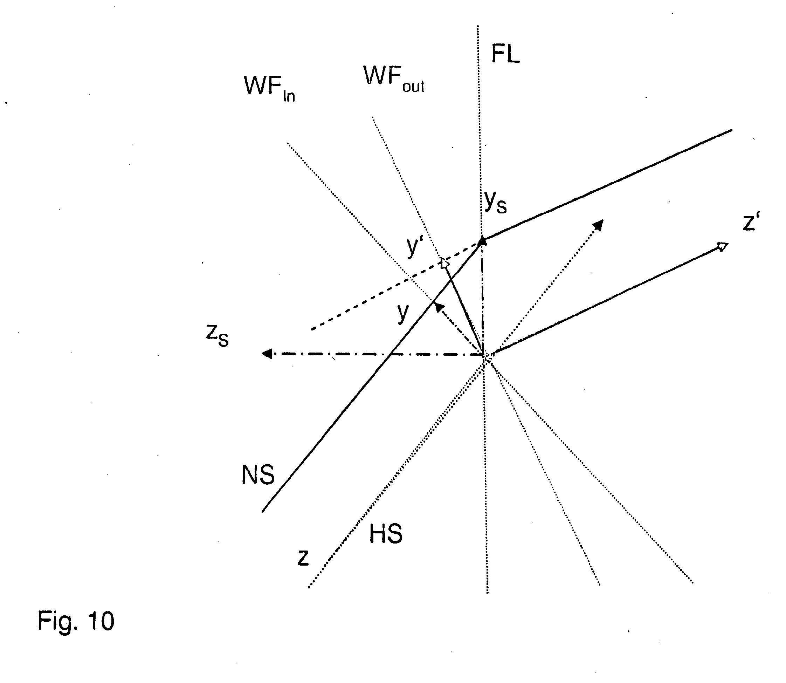

Der Zusammenhang der lokalen Koordinatensysteme ist in Fig. 10 für die zu einem Hauptstrahl (HS) gehörigen einlaufenden Wellenfronten ($WF_{in}$) und auslaufenden Wellenfronten ($WF_{out}$) nochmals dargestellt.

In einer anderen bevorzugten Ausführungsform umfasst das Verfahren zum Entwerfen bzw. Herstellung eines Brillenglases ein Festlegen eines globalen Koordinatensystems. Vorzugsweise entspricht das globale Koordinatensystem dem lokalen Koordinatensystem der Fläche. Die z-Achse ist dabei identisch mit der Flächennormale der brechenden Fläche, insbesondere der Vorder- bzw. Rückfläche des Brillenglases. Es ist dann keine Koordinatentransformation notwendig.

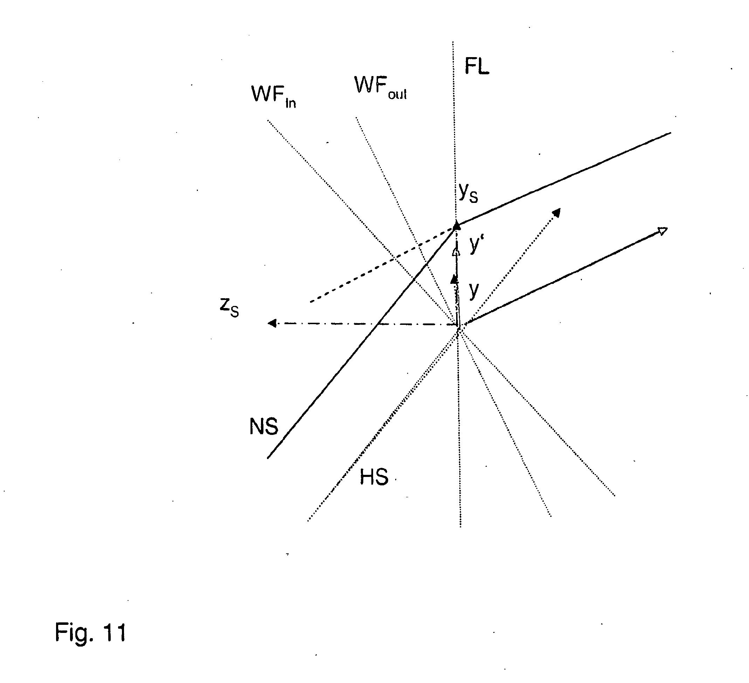

Folgender Zusammenhang besteht in diesem Fall eines globalen Koordinatensystems zwischen der Koordinate y der auftreffenden Wellenfront, der Koordinate $y_s$ der brechenden Fläche und der Koordinate y' der austretenden Wellenfront wie in Fig. 11 für die zu einem Hauptstrahl (HS) gehörigen, einlaufenden Wellenfronten ($WF_{in}$) und auslaufenden Wellenfronten ($WF_{out}$) dargestellt ist.

$$y(y_s) = y_s \cos^2\varepsilon$$

$$y'(y_s) = y_s \cos^2\varepsilon'$$

Wie bereits oben dargestellt, werden die Wellenfronten und/oder Flächen, insbesondere die Vorder- und/oder Rückfläche des Brillenglases, vorzugsweise durch Potenzreihen beschrieben bzw. dargestellt. Die vorhergehend beschriebene Aberrationsfunktion bzw. Wellenfront für einen festen Objektpunkt mit den Parametern r und 0 :

$$W(r,\theta) = \sum_{n=0}^{\infty} \sum_{m=0}^{n} a_{n,m} r^n \cos^m\theta$$

wird vorzugsweise in ähnlicher Form in kartesischen Koordinaten dargestellt durch:

$$W(x,y) = \sum_{n=1}^{\infty} \sum_{m=0}^{n} \frac{a_{m,n-m}}{n!} x^m y^{n-m} \,,$$

wobei insbesondere der konstante Term, der in der weiteren Betrachtung vorzugsweise nicht benötigt ist, außer Acht gelassen und es erfolgt zusätzlich eine Normierung durch die Fakultät von n. In der folgenden Tabelle werden entsprechend dieser bevorzugten Darstellung die primären Abbildungsfehler bis zur 4. Ordnung aufgelistet, wobei vorzugsweise einer oder mehrere dieser Aberrationsterme beim Entwerfen bzw. Herstellen des Brillenglases berücksichtigt werden.

| N | m | n-m | Aberrationsterm | Abbildungs-Fehler |
|---|---|-----|-----------------|-------------------|
| 1 | 1 | 0 | $a_{1,0}x$ | Prisma$_x$ |
| 1 | 0 | 1 | $a_{0,1}y$ | Prismay |
| 2 | 2 | 0 | $\dfrac{a_{2,0}}{2}x^2$ | Sph$_{xx}$ |
| 2 | 1 | 1 | $\dfrac{a_{1,1}}{2}xy$ | Sph$_{xy}$ |
| 2 | 0 | 2 | $\dfrac{a_{0,2}}{2}y^2$ | Sph$_{yy}$ |
| 3 | 3 | 0 | $\dfrac{a_{3,0}}{3}x^3$ | Koma$_{xxx}$ |
| 3 | 2 | 1 | $\dfrac{a_{2,1}}{3}x^2y$ | Koma$_{xxy}$ |
| 3 | 1 | 2 | $\dfrac{a_{1,2}}{3}xy^2$ | Koma$_{xyy}$ |
| 3 | 0 | 3 | $\dfrac{a_{0,3}}{3}y^3$ | Koma$_{yyy}$ |
| 4 | 4 | 0 | $\dfrac{a_{4,0}}{4}x^4$ | Sph. Aberration$_{xxx}$ |
| 4 | 3 | 1 | $\dfrac{a_{3,1}}{4}x^3y$ | Sph. Aberration$_{xxxy}$ |
| 4 | 2 | 2 | $\dfrac{a_{2,2}}{4}x^2y^2$ | Sph. Aberration$_{xxyy}$ |
| 4 | 1 | 3 | $\dfrac{a_{1,3}}{4}xy^3$ | Sph. Aberration$_{xyyy}$ |
| 4 | 0 | 4 | $\dfrac{a_{0,4}}{4}y^4$ | Sph. Aberration$_{yyyy}$ |

Verwendet man drei lokale Koordinatensysteme, so fällt auch der Term erster Ordnung weg.

$$W(x,y) = \sum_{n=2}^{\infty}\sum_{m=0}^{n} \frac{a_{m,n-m}}{n!}x^m y^{n-m}$$

Für die einfallende Wellenfront bis zur 6. Ordnung ergibt sich dann:

$$\bar{W}F_{In}(x,y) = (x, y, \sum_{n=2}^{6}\sum_{m=0}^{n}\frac{a_{m,n-m}}{n!}x^m y^{n-m})$$

Die zugehörigen lokalen Abbildungsfehler der einfallenden Wellenfront ergeben sich durch Multiplizieren des Koeffizienten mit der Brechzahl n:

$Sph_{xx} = na_{2,0}$; $Sph_{xy} = na_{1,1}$; $Sphyy = na_{0,2}$; $Koma_{xxx} = n\,a_{3,0}$ usw.

Äquivalent für die brechende Fläche:

$$\bar{S}(x_s, y_s) = (x_s, y_s, \sum_{n=2}^{6}\sum_{m=0}^{n}\frac{a_{m,n-m}}{n!}x_s^{m}y_s^{n-m})$$

Die zugehörigen lokalen Abbildungsfehler der brechenden Fläche ergeben sich durch Multiplizieren des Koeffizienten mit der Brechzahldifferenz n'-n:

$Sph_{Sxx} = (n'-n)\,a_{2,0}$; $Sph_{Sxy} = (n'-n)\,a_{1,1}$; $Sph_{Syy} = (n'-n)\,a_{0,2}$; $Koma_{Sxxx} = (n'-n)\,a_{3,0}$ usw.

und äquivalent für die austretende Wellenfront:

$$\bar{W}F_{Out}(x',y') = (x', y', \sum_{n=2}^{6}\sum_{m=0}^{n}\frac{a_{m,n-m}}{n!}x'^{m}y'^{n-m})$$

Die zugehörigen lokalen Abbildungsfehler der auslaufenden Wellenfront ergeben sich durch Multiplizieren des Koeffizienten mit der Brechzahl n':

$Sph'_{xx} = n'\,a_{2,0}$; $Sph'_{xy} = n'\,a_{1,1}$; $Sph'_{yy} = n'\,a_{0,2}$; $Koma'_{xxx} = n'\,a_{3,0}$ usw.

Vorzugsweise umfasst das Entwerfen bzw. Herstellen des Brillenglases ein Ermitteln der Aberration der austretenden bzw. auslaufenden bzw. augenseitigen Wellenfront. Diese wird insbesondere abhängig von bzw. aufgrund der Aberration der einfallenden Wellenfront und der Aberration der brechenden Fläche, insbesondere der ersten und/oder zweiten Brillenglasfläche ermittelt. Dabei wird vorzugsweise folgendermaßen vorgegangen:

Vorzugsweise umfasst das Ermitteln der Aberration der auslaufenden Wellenfront einen oder mehrere, vorzugsweise alle der Schritte, insbesondere in der angegebenen Reihenfolge:

- Ermitteln bzw. Berechnen der Normale der eintreffenden Wellenfront und der brechenden Fläche aus den 1. Richtungsableitungen

$$\bar{N}(x,y) = \frac{\frac{\partial \bar{W}F_{In}}{\partial x} \times \frac{\partial \bar{W}F_{In}}{\partial y}}{\left|\frac{\partial \bar{W}F_{In}}{\partial x} \times \frac{\partial \bar{W}F_{In}}{\partial y}\right|} \qquad \bar{N}_s(x_s, y_s) = \frac{\frac{\partial \bar{S}}{\partial x_s} \times \frac{\partial \bar{S}}{\partial y_s}}{\left|\frac{\partial \bar{S}}{\partial x_s} \times \frac{\partial \bar{S}}{\partial y_s}\right|} \qquad ;$$

- Ermitteln bzw. Berechnen der Normale der austretenden Wellenfront mit dem Brechungsgesetz

$$\bar{N}'(\bar{N}, \bar{N}_s) = \mu \bar{N} + \gamma(\bar{N}, \bar{N}_s)\bar{N}_s$$

$$\gamma(\bar{N}, \bar{N}_s) = -\mu \bar{N} \cdot \bar{N}_s + \sqrt{1 - \mu^2(1 - (\bar{N} \cdot \bar{N}_s)^2)} \qquad ;$$

$$\mu = \frac{n}{n'}$$

- Differenzieren der Normale der austretenden Wellenfront mit dem Brechungsgesetz

$$\frac{\partial}{\partial y'}\bar{N}'(\bar{N}, \bar{N}_s) \quad \frac{\partial^2}{\partial y'^2}\bar{N}'(\bar{N}, \bar{N}_s) \quad usw. \qquad ;$$

- Ermitteln bzw. Berechnen der Normale der Beschreibung (Potenzreihe) der austretenden Wellenfront und entsprechendes Ableiten der Normale

$$\bar{N}_{WF}(x', y') = \frac{\dfrac{\partial \vec{WF}_{Out}}{\partial x'} \times \dfrac{\partial \vec{WF}_{Out}}{\partial y'}}{\left| \dfrac{\partial \vec{WF}_{Out}}{\partial x'} \times \dfrac{\partial \vec{WF}_{Out}}{\partial y'} \right|} \quad \frac{\partial}{\partial y'}\bar{N}_{WF}(x', y') \quad usw. \quad ;$$

- Bestimmen der Koeffizienten ak der austretenden bzw. auslaufenden Wellenfront insbesondere durch Gleichsetzen der Ableitungen

$$\frac{\partial}{\partial y'}\bar{N}'(\bar{N}, \bar{N}_s) = \frac{\partial}{\partial y'}\bar{N}_{WF}(x', y') \quad usw. \qquad ;$$

und/oder

- Ermitteln bzw. Berechnung der Abbildungsfehler aus den Koeffizienten ak.

$$z(y) = \sum_k \frac{a_k}{k!}y^k = \frac{a_2}{2}y^2 + \frac{a_3}{3}y^3 + \frac{a_4}{4}y^4 + \frac{a_5}{5}y^5 + \frac{a_6}{6}y^6 \ldots$$

$$mit \quad Sph = n \cdot a_2 \quad Koma = n \cdot a_3 \quad Sph.Aber. = n \cdot a_4$$

$$Sec.Koma = n \cdot a_5 \quad Sec.Sph.Aber. = n \cdot a_6$$

Im Folgenden werden die Zusammenhänge der einzelnen Größen für Aberrationen verschiedener Ordnungen bei Betrachtung in verschiedener Anzahl von Dimensionen also für verschiedene Grade an Symmetrie für bevorzugte Ausführungsformen der vorliegenden Erfindung zusammengefasst.

Brechwert und Astigmatismus lassen sich dabei ein-dimensional durch Abbildungseigenschaften in der Brechungsebene darstellen bzw. ermitteln durch:

- Bei senkrechtem Auftreffen der ankommenden Wellenfront auf die Fläche:

$$S' = S + D$$

- Bei schrägem Auftreffen der ankommenden Wellenfront:

$$S' \cos^2 \varepsilon' = S \cos^2$$

In zwei Dimensionen ergibt sich für senkrechtes Auftreffen der Wellenfront für die Schninweitengleichung (Vergenzgleichung)

- bei rotationssymmetrischer Wellenfront und Fläche:

$$S' = S + D;$$

- bei astigmatischer Wellenfront und Fläche mit parallelen Achsen:

$$S'_x = S_x + D_x$$

$$S'_y = S_y + D_y$$

und

- bei astigmatischer Wellenfront und Fläche mit schrägen Achsen (Schiefgekreuzte Zylinder):

$$S'_{xx} = S_{xx} + D_{xx}$$

$$S'_{xy} = S_{xy} + D_{xy}$$

$$S'_{yy} = S_{yy} + D_{yy}$$

In zwei Dimensionen bei schrägem Auftreffen der Wellenfront ergibt sich vorzugsweise

- bei sphärischer Wellenfront und Fläche:

$$S'_x = S + D \frac{n' \cos \varepsilon' - n \cos \varepsilon}{n' - n}$$

$$S'_y \cos^2 \varepsilon' = S \cos^2 \varepsilon + D \frac{n' \cos \varepsilon' - n \cos \varepsilon}{n' - n}$$

- bei sphärische Wellenfront und astigmatischer Fläche jedoch mit einer Hauptschnittsrichtung parallel zur Brechungsebene:

Coddington Gleichung:

$$S'_x = S + D_x \frac{n'\cos\varepsilon' - n\cos\varepsilon}{n'-n}$$

$$S'_y \cos^2\varepsilon' = S\cos^2\varepsilon + D_y \frac{n'\cos\varepsilon' - n\cos\varepsilon}{n'-n}$$

- bei astigmatischer Wellenfront und astigmatischer Fläche mit schrägen Achslagen, die nicht mit der Brechungsebene übereinstimen:

Allgemeine Coddington Gleichung:

$$\mathbf{C'S'C'} = \mathbf{CSC} + \frac{n'\cos\varepsilon' - n\cos\varepsilon}{n'-n}\mathbf{D}$$

$$\mathbf{S} = \begin{pmatrix} S_{xx} & S_{xy} \\ S_{xy} & S_{yy} \end{pmatrix} = \begin{pmatrix} (S+\frac{z}{2}) - \frac{z}{2}\cos 2\alpha & -\frac{z}{2}\sin 2\alpha \\ -\frac{z}{2}\sin 2\alpha & (S+\frac{z}{2}) + \frac{z}{2}\cos 2\alpha \end{pmatrix}$$

$$C = \begin{pmatrix} 1 & 0 \\ 0 & \cos\varepsilon \end{pmatrix} \quad C' = \begin{pmatrix} 1 & 0 \\ 0 & \cos\varepsilon' \end{pmatrix}$$

Bei Berücksichtigung von Abbildungsfehlern höherer Ordnung werden in einer Dimension Abbildungseigenschaften in der Brechungsebene bei nur einem einzelnen Fehler einer Ordnung der Fläche und Wellenfront vorzugsweise folgendermaßen ermittelt:

- Bei senkrechtem Auftreffen der ankommenden Wellenfront auf die Fläche: Brechwert: S' = S + D (Schnittweitengleichung)

| | |
|---|---|
| Koma: | Koma' = Koma + KomaS |
| Sphärische Aberration: | Sph. Aberr.' = Sph. Aberr. + Sph. Aberr.S |
| Secondary Koma: | Sec.Koma' = Sec.Koma + Sec.KomaS |
| Secondary Sph.Aberration: | Sec.Sph. Aberr.' = Sec.Sph. Aberr. + Sec.Sph. Aberr.S |

Dabei wird vorzugsweise die Schnittweitengleichung verallgemeinert durch:

$$\text{Error'} = \text{Error} + \text{ErrorS}$$

- Bei schrägem Auftreffen der ankommenden Wellenfront:

$$\text{Brechwert: } S'\cos^2\varepsilon' = S\cos^2\varepsilon + D\frac{n'\cos\varepsilon' - n\cos\varepsilon}{n'-n}$$

$$\text{Koma: } Koma'\cos^3\varepsilon' = Koma\cos^3\varepsilon + Koma_s \frac{n'\cos\varepsilon' - n\cos\varepsilon}{n'-n}$$

Sphärische Aberration:

$$Sph.Aber.'\cos^4 \varepsilon' = Sph.Aber.\cos^4 \varepsilon + Sph.Aber._S \frac{n'\cos\varepsilon' - n\cos\varepsilon}{n'-n}$$

Secondary Koma:

$$Sec.Koma'\cos^5 \varepsilon' = Sec.Koma\cos^5 \varepsilon + Sec.Koma_S \frac{n'\cos\varepsilon' - n\cos\varepsilon}{n'-n}$$

Secondary Sph.Aberration:

$$Sec.Sph.Aber.'\cos^6 \varepsilon' = Sec.Sph.Aber.\cos^6 \varepsilon + Sec.Sph.Aber._S \frac{n'\cos\varepsilon' - n\cos\varepsilon}{n'-n}$$

Dabei wird vorzugsweise die Schnittweitengleichung verallgemeinert durch:

$$Error'(k)\cos^k \varepsilon' = Error(k)\cos^k \varepsilon + Error_S(k)\frac{n'\cos\varepsilon' - n\cos\varepsilon}{n'-n}$$

Bei Berücksichtigung von Abbildungsfehlern höherer Ordnung werden in zwei Dimension Abbildungseigenschaften bei nur einem einzelnen Fehler einer Ordnung der Fläche und Wellenfront vorzugswesweise folgendermaßen ermittelt:

Brechwert:

$$S_{xx}' = S_{xx} + D_{xx} \frac{n'\cos\varepsilon' - n\cos\varepsilon}{n'-n}$$

$$S_{xy}'\cos\varepsilon' = S_{xy}\cos\varepsilon + D_{xy} \frac{n'\cos\varepsilon' - n\cos\varepsilon}{n'-n}$$

$$S_{yy}'\cos^2 \varepsilon' = S_{yy}\cos^2 \varepsilon + D_{yy} \frac{n'\cos\varepsilon' - n\cos\varepsilon}{n'-n}$$

Koma:

$$Koma_{xx}' = Koma_{xx} + Koma_{S\,xx} \frac{n'\cos\varepsilon' - n\cos\varepsilon}{n'-n}$$

$$Koma_{xy}'\cos\varepsilon' = Koma_{xy}\cos\varepsilon + Koma_{S\,xy} \frac{n'\cos\varepsilon' - n\cos\varepsilon}{n'-n}$$

$$Koma_{yy}'\cos^2 \varepsilon' = Koma_{yy}\cos^2 \varepsilon + Koma_{S\,yy} \frac{n'\cos\varepsilon' - n\cos\varepsilon}{n'-n}$$

$$Koma_{yyy}'\cos^3 \varepsilon' = Koma_{yyy} \cos^3 \varepsilon + Koma_{S_{yyy}} \frac{n'\cos\varepsilon' - n\cos\varepsilon}{n' - n}$$

Sphärische Aberration:

$$SphAber_{xxx}' = SphAber_{xxx} + SphAber_{S_{xxx}} \frac{n'\cos\varepsilon' - n\cos\varepsilon}{n' - n}$$

$$SphAber_{xxy}'\cos\varepsilon' = SphAber_{xxy} \cos\varepsilon + SphAber_{S_{xxy}} \frac{n'\cos\varepsilon' - n\cos\varepsilon}{n' - n}$$

$$SphAber_{xyy}'\cos^2\varepsilon' = SphAber_{xyy} \cos^2\varepsilon + SphAber_{S_{xyy}} \frac{n'\cos\varepsilon' - n\cos\varepsilon}{n' - n}$$

$$SphAber_{xyyy}'\cos^3\varepsilon' = SphAber_{xyyy} \cos^3\varepsilon + SphAber_{S_{xyyy}} \frac{n'\cos\varepsilon' - n\cos\varepsilon}{n' - n}$$

$$SphAber_{yyyy}'\cos^4\varepsilon' = SphAber_{yyyy} \cos^4\varepsilon + SphAber_{S_{yyyy}} \frac{n'\cos\varepsilon' - n\cos\varepsilon}{n' - n}$$

Secondary Koma:

$$Sec.Koma_{xxxx}' = Sec.Koma_{xxxx} + Sec.Koma_{S_{xxxx}} \frac{n'\cos\varepsilon' - n\cos\varepsilon}{n' - n}$$

$$Sec.Koma_{xxxy}'\cos\varepsilon' = Sec.Koma_{xxxy} \cos\varepsilon + Sec.Koma_{S_{xxxy}} \frac{n'\cos\varepsilon' - n\cos\varepsilon}{n' - n}$$

$$Sec.Koma_{xxyy}'\cos^2\varepsilon' = Sec.Koma_{xxyy} \cos^2\varepsilon + Sec.Koma_{S_{xxyy}} \frac{n'\cos\varepsilon' - n\cos\varepsilon}{n' - n}$$

$$Sec.Koma_{xxyyy}'\cos^3\varepsilon' = Sec.Koma_{xxyyy} \cos^3\varepsilon + Sec.Koma_{S_{xxyyy}} \frac{n'\cos\varepsilon' - n\cos\varepsilon}{n' - n}$$

$$Sec.Koma_{xyyyy}'\cos^4\varepsilon' = Sec.Koma_{xyyyy} \cos^4\varepsilon + Sec.Koma_{S_{xyyyy}} \frac{n'\cos\varepsilon' - n\cos\varepsilon}{n' - n}$$

$$Sec.Koma_{yyyyy}'\cos^5\varepsilon' = Sec.Koma_{yyyyy} \cos^5\varepsilon + Sec.Koma_{S_{yyyyy}} \frac{n'\cos\varepsilon' - n\cos\varepsilon}{n' - n}$$

Secondary Sph. Aberration:

$$Sec.SphAber_{xxxxx}' = Sec.SphAber_{xxxxx} + Sec.SphAber_{S_{xxxxx}} \frac{n'\cos\varepsilon' - n\cos\varepsilon}{n'-n}$$

$$Sec.SphAber_{xxxxy}'\cos\varepsilon' = Sec.SphAber_{xxxxy}\cos\varepsilon + Sec.SphAber_{S_{xxxxy}} \frac{n'\cos\varepsilon' - n\cos\varepsilon}{n'-n}$$

$$Sec.SphAber_{xxxyy}'\cos^2\varepsilon' = Sec.SphAber_{xxxyy}\cos^2\varepsilon + Sec.SphAber_{S_{xxxyy}} \frac{n'\cos\varepsilon' - n\cos\varepsilon}{n'-n}$$

$$Sec.SphAber_{xxyyy}'\cos^3\varepsilon' = Sec.SphAber_{xxyyy}\cos^3\varepsilon + Sec.SphAber_{S_{xxyyy}} \frac{n'\cos\varepsilon' - n\cos\varepsilon}{n'-n}$$

$$Sec.SphAber_{xyyyy}'\cos^4\varepsilon' = Sec.SphAber_{xyyyy}\cos^4\varepsilon + Sec.SphAber_{S_{xyyyy}} \frac{n'\cos\varepsilon' - n\cos\varepsilon}{n'-n}$$

$$Sec.SphAber_{xyyyy}'\cos^5\varepsilon' = Sec.SphAber_{xyyyy}\cos^5\varepsilon + Sec.SphAber_{S_{xyyyy}} \frac{n'\cos\varepsilon' - n\cos\varepsilon}{n'-n}$$

$$Sec.SphAber_{yyyyy}'\cos^6\varepsilon' = Sec.SphAber_{yyyyy}\cos^6\varepsilon + Sec.SphAber_{S_{yyyyy}} \frac{n'\cos\varepsilon' - n\cos\varepsilon}{n'-n}$$

Für die bevorzugte Powervektorschreibweise gilt insbesondere:

Brechwert:

$$C'\vec{S}' = C\vec{S} + \vec{D}\frac{n'\cos\varepsilon' - n\cos\varepsilon}{n'-n}$$

$$\vec{S}' = \begin{pmatrix} S'_{xx} \\ S'_{xy} \\ S'_{yy} \end{pmatrix} \quad \vec{S} = \begin{pmatrix} S_{xx} \\ S_{xy} \\ S_{yy} \end{pmatrix} \quad \vec{D} = \begin{pmatrix} D_{xx} \\ D_{xy} \\ D_{yy} \end{pmatrix}$$

$$C' = \begin{pmatrix} 1 & 0 & 0 \\ 0 & \cos\varepsilon' & 0 \\ 0 & 0 & \cos^2\varepsilon' \end{pmatrix} \quad C = \begin{pmatrix} 1 & 0 & 0 \\ 0 & \cos\varepsilon & 0 \\ 0 & 0 & \cos^2\varepsilon \end{pmatrix}$$

Koma:

$$C'\vec{K}' = C\vec{K} + \vec{K}_S \frac{n'\cos\varepsilon' - n\cos\varepsilon}{n'-n}$$

$$\vec{K}' = \begin{pmatrix} K'_{xxx} \\ K'_{xxy} \\ K'_{xyy} \\ K'_{yyy} \end{pmatrix} \quad \vec{K} = \begin{pmatrix} K_{xxx} \\ K_{xxy} \\ K_{xyy} \\ K_{yyy} \end{pmatrix} \quad \vec{K}_S = \begin{pmatrix} K_{S\,xxx} \\ K_{S\,xxy} \\ K_{S\,xyy} \\ K_{S\,yyy} \end{pmatrix}$$

$$C' = \begin{pmatrix} 1 & 0 & 0 & 0 \\ 0 & \cos\varepsilon' & 0 & 0 \\ 0 & 0 & \cos^2\varepsilon' & 0 \\ 0 & 0 & 0 & \cos^3\varepsilon' \end{pmatrix} \quad C = \begin{pmatrix} 1 & 0 & 0 & 0 \\ 0 & \cos\varepsilon & 0 & 0 \\ 0 & 0 & \cos^2\varepsilon & 0 \\ 0 & 0 & 0 & \cos^3\varepsilon \end{pmatrix}$$

Für eine bevorzugte Verallgemeinerung der Coddington Gleichung ergibt sich:

$$C'\vec{E}(k)' = C\vec{E}(k) + \lambda\vec{E}(k)_S$$

$$\lambda = \frac{n'\cos\varepsilon' - n\cos\varepsilon}{n' - n}$$

$$\vec{E}' = \begin{pmatrix} E'_{kx} \\ E'_{(k-1)x,y} \\ \dots \\ E'_{ky} \end{pmatrix} \quad \vec{E} = \begin{pmatrix} E_{kx} \\ E_{(k-1)x,y} \\ \dots \\ E_{ky} \end{pmatrix} \quad \vec{E}_S = \begin{pmatrix} E_{S\,kx} \\ E_{S\,(k-1)x,y} \\ \dots \\ E_{S\,ky} \end{pmatrix}$$

$$C' = \begin{pmatrix} c'_{1,1} & \cdot & \cdot & c'_{1,k+1} \\ \cdot & \cdot & \cdot & \cdot \\ \cdot & \cdot & \cdot & \cdot \\ c'_{k+1,1} & \cdot & \cdot & c'_{k+1,k+1} \end{pmatrix} \quad c'_{i,j} = \begin{cases} 0 & \\ \cos^{i-1}\varepsilon' & \end{cases} \text{für} \begin{matrix} i \neq j \\ i = j \end{matrix}$$

$$C = c_{i,j} = \begin{cases} 0 & \\ \cos^{i-1}\varepsilon & \end{cases} \text{für} \begin{matrix} i \neq j \\ i = j \end{matrix}$$

Bei Berücksichtigung von Abbildungsfehlern höherer Ordnung werden in zwei Dimension Abbildungseigenschaften bei mehreren Fehlern vorzugsweise folgendermaßen ermittelt:

$$C'\vec{E}(k)' = C\vec{E}(k) + \lambda\vec{E}(k)_S + \vec{Z}$$

$$\lambda = \frac{n'\cos\varepsilon' - n\cos\varepsilon}{n' - n}$$

Zum Beispiel für Koma

$$C'\vec{K}' = C\vec{K} + \lambda\vec{K}_S + \vec{Z}$$

$$\lambda = \frac{n'\cos\varepsilon' - n\cos\varepsilon}{n' - n}$$

$$\vec{K}' = \begin{pmatrix} K'_{xx} \\ K'_{xy} \\ K'_{xy} \\ K'_{yy} \end{pmatrix} \quad \vec{K} = \begin{pmatrix} K_{xx} \\ K_{xy} \\ K_{xy} \\ K_{yy} \end{pmatrix} \quad \vec{K}_S = \begin{pmatrix} K_{Sxx} \\ K_{Sxy} \\ K_{Sxy} \\ K_{Syy} \end{pmatrix}$$

$$C' = \begin{pmatrix} 1 & 0 & 0 & 0 \\ 0 & \cos\varepsilon' & 0 & 0 \\ 0 & 0 & \cos^2\varepsilon' & 0 \\ 0 & 0 & 0 & \cos^3\varepsilon' \end{pmatrix} \quad C = \begin{pmatrix} 1 & 0 & 0 & 0 \\ 0 & \cos\varepsilon & 0 & 0 \\ 0 & 0 & \cos^2\varepsilon & 0 \\ 0 & 0 & 0 & \cos^3\varepsilon \end{pmatrix}$$

$$\vec{Z} = \begin{pmatrix} Z_{xx} \\ Z_{xy} \\ Z_{xy} \\ Z_{yy} \end{pmatrix}$$

$$Z_{xx} = 2\tan\varepsilon' \lambda D_{xx} \left( \frac{D_{xy}}{n'-n} - \frac{S_{xy}}{n} \right)$$

$$Z_{xy} = 3\frac{\sin\varepsilon'}{n'} \left( \left( \frac{n'}{n} S_{xx} \right)^2 - (\lambda D_{xx} + S_{xx})^2 + \frac{n'^2\cos^2\varepsilon' - n^2\cos^2\varepsilon}{\cos^2\varepsilon'} \left( \frac{D_{xy}}{n'-n} - \frac{S_{xy}}{n} \right)^2 \right)$$

$$Z_{xy} = 6\tan\varepsilon' \lambda D_{xy} \left( \frac{D_{yy}}{n'-n} - \cos\varepsilon\frac{S_{yy}}{n} \right)$$

$$Z_{yy} = \frac{\sin\varepsilon'}{n'} \left( \frac{n'^2\cos^2\varepsilon' - n^2\cos^2\varepsilon}{\cos^2\varepsilon'} \left( \cos\varepsilon\frac{S_{yy}}{n} - \frac{D_{yy}}{n'-n} \right)^2 + \cos^2\varepsilon\frac{n'^2}{n^2}S_{xy}^2 - (\cos\varepsilon S_{xy} + \lambda D_{xy})^2 \right)$$

In einer bevorzugten Ausführungsform weisen die einzelnen Aberrationen bestimmte Abhängigkeiten auf. Zusammenhänge der Eigenschaften der ausgehenden bzw. auslaufenden Wellenfront in Abhängigkeit von Eigenschaften der ankommenden bzw. einlaufenden bzw. eintreffenden Wellenfront bzw. der brechenden Fläche bzw. Flächen in der Brechungsebene(n) bis zur 6. Ordnung (Sec. Sph.Aberr.) werden im Folgenden im Überblick dargestellt. In den folgenden Tabellen werden jeweils für eine Eigenschaft der austretenden Wellenfront bevorzugte Kombinationen von Aberrationen der ankommenden Wellenfront bzw. brechenden Fläche zusammengefasst. Jede Zeile der Tabelle stellt eine mögliche Kombination dar. Eine Null bedeutet, die eingehende bzw. brechende Fläche hat diese Eigenschaft nicht, ein Plus (+) bedeutet, die eingehende bzw. brechende Fläche hat diese Eigenschaft und diese Eigenschaft hat auch Einfluss auf die dargestellte Eigenschaft der austretenden Wellenfront und ein Plus in Klammern ((+)) bedeutet, die eingehende bzw. brechende Fläche hat diese Eigenschaft aber diese Eigenschaft hat vorzugsweise keinen Einfluss auf die dargestellte Eigenschaft der austretenden Wellenfront. In der linken Spalte sind dann nochmals die Eigenschaften der ankommenden Wellenfront oder brechenden Fläche aufgeführt, die Einfluss auf die dargestellte Eigenschaft der austretenden Wellenfront haben.

Brechwert:

| Ausgehende Wellenfront | Eingehende Wellenfront/ Brechende Fläche | |
|---|---|---|
| Brechwert | Einfallswinkel e | Brechwert D |
| 0 | (+) | 0 |
| **D** | 0 | + |
| **e, D** | + | + |

Der Brechwert der ankommenden Wellenfront und/oder brechenden Fläche hat immer Einfluss auf den Brechwert der austretenden Wellenfront.

Koma:

| Ausgehende Wellenfront | Eingehende Wellenfront/ Brechende Fläche | | |
|---|---|---|---|
| Koma | Einfallswinkel e | Brechwert D | Koma K |
| 0 | (+) | 0 | 0 |
| **0** | 0 | (+) | 0 |
| **K** | 0 | 0 | + |
| **e, D** | + | + | 0 |
| **e, K** | + | 0 | + |
| **K** | 0 | (+) | + |
| **e, D, K** | + | + | + |

Die Koma der ankommenden Wellenfront und/oder brechenden Fläche hat immer Einfluss auf die Koma der austretenden Wellenfront. Der Brechwert hat allerdings nur einen Einfluss auf die Koma der austretenden Wellenfront, wenn die Wellenfront schräg auftrifft.

Sphärische Aberration:

| Ausgehende Wellenfront | Eingehende Wellenfront/ Brechende Fläche | | | |
|---|---|---|---|---|
| Sph. Aberration | Einfallswinkel e | Brechwert D | Koma K | Sph. Aberration SA |
| **0** | (+) | 0 | 0 | 0 |
| **D** | 0 | + | 0 | 0 |
| **0** | 0 | 0 | (+) | 0 |
| **SA** | 0 | 0 | 0 | + |
| **e, D** | + | + | 0 | 0 |
| **0** | (+) | 0 | (+) | 0 |

(fortgesetzt)

| Ausgehende Wellenfront | Eingehende Wellenfront/ Brechende Fläche | | | |
|---|---|---|---|---|
| Sph. Aberration | Einfallswinkel e | Brechwert D | Koma K | Sph. Aberration SA |
| **e, SA** | + | 0 | 0 | + |
| **D** | 0 | + | (+) | 0 |
| **D, SA** | 0 | + | 0 | + |
| **SA** | 0 | 0 | (+) | + |
| **e, D, K** | + | + | + | 0 |
| **e, D, SA** | + | + | 0 | + |
| **e, SA** | + | 0 | (+) | + |
| **D, SA** | 0 | + | (+) | + |
| **e, D, K, SA** | + | + | + | + |

Die sph. Aberration der ankommenden Wellenfront und/oder brechenden Fläche hat immer Einfluss auf die sph. Aberration der austretenden Wellenfront. Die Koma der ankommenden Wellenfront und/oder brechenden Fläche hat nur Einfluss auf die sph. Aberration der austretenden Wellenfront in Verbindung mit Brechwert und schrägem Auftreffen. Der Brechwert der ankommenden Wellenfront und/oder brechenden Fläche hat immer einen Einfluss auf die sph. Aberration der austretenden Wellenfront.

Sec. Koma:

| Ausgehende Wellenfront | Eingehende Wellenfront/ Brechende Fläche | | | | |
|---|---|---|---|---|---|
| Sec. Koma | Einfallswinkel e | Brechwert D | Koma K | Sph. Aberration SA | Sec. Koma SecK |
| 0 | (+) | 0 | 0 | 0 | 0 |
| 0 | 0 | (+) | 0 | 0 | 0 |
| 0 | 0 | 0 | (+) | 0 | 0 |
| 0 | 0 | 0 | 0 | (+) | 0 |
| **SecK** | 0 | 0 | 0 | 0 | + |
| **e, D** | + | + | 0 | 0 | 0 |
| **e, K** | + | 0 | + | 0 | 0 |
| **0** | (+) | 0 | 0 | (+) | 0 |
| **e, SecK** | + | 0 | 0 | 0 | + |
| **D, K** | 0 | + | + | 0 | 0 |
| **0** | 0 | (+) | 0 | (+) | 0 |
| **SecK** | 0 | (+) | 0 | 0 | + |
| **0** | 0 | 0 | (+) | (+) | 0 |
| **SecK** | 0 | 0 | (+) | 0 | + |
| **SecK** | 0 | 0 | 0 | (+) | + |
| **e, D, K** | + | + | + | 0 | 0 |
| **e, D, SA** | + | + | 0 | + | 0 |
| **e, D, SecK** | + | + | 0 | 0 | + |
| **e, K** | + | 0 | + | (+) | 0 |
| **e, K, SecK** | + | 0 | + | 0 | + |

(fortgesetzt)

| Ausgehende Wellenfront | Eingehende Wellenfront/ Brechende Fläche | | | | |
|---|---|---|---|---|---|
| Sec. Koma | Einfallswinkel e | Brechwert D | Koma K | Sph. Aberration SA | Sec. Koma SecK |
| **e, SecK** | + | 0 | 0 | (+) | + |
| **D, K** | 0 | + | + | (+) | 0 |
| **D, K, SecK** | 0 | + | + | 0 | + |
| **SecK** | 0 | (+) | 0 | (+) | + |
| **SecK** | 0 | 0 | (+) | (+) | + |
| **e, D, K, SA** | + | + | + | + | 0 |
| **e, D, K, SecK** | + | + | + | 0 | + |
| **e, D, SA, SecK** | + | + | 0 | + | + |
| **e, K, SecK** | + | 0 | + | (+) | + |
| **D, K, SecK** | 0 | + | + | (+) | + |
| **e, D, K, SA, SecK** | + | + | + | + | + |

Die Sec. Koma der ankommenden Wellenfront und/oder brechenden Fläche hat immer Einfluss auf die Sec. Koma der austretenden Wellenfront. Die Sph. Aberration der ankommenden Wellenfront und/oder brechenden Fläche hat nur Einfluss auf die Sec. Koma der austretenden Wellenfront in Verbindung mit Brechwert und schrägem Auftreffen. Die Koma der ankommenden Wellenfront und/oder brechenden Fläche hat nur Einfluss auf die Sec. Koma der austretenden Wettenfront in Verbindung mit Brechwert und/oder schrägem Auftreffen. Der Brechwert der ankommenden Wellenfront und/oder brechenden Fläche hat nur Einfluss auf die Sec. Koma der austretenden Wellenfront in Verbindung mit Koma und/oder schrägem Auftreffen.

Sec. Sph. Aberration

| Ausgehende Wellenfront | Eingehende Wellenfront/ Brechende Fläche | | | | | |
|---|---|---|---|---|---|---|
| Sec. Koma | Einfallswinkel e | Brechwert D | Koma K | Sph. Aberration SA | Sec. Koma SecK | Sec. Sph. Aberr SecSA |
| 0 | (+) | 0 | 0 | 0 | 0 | 0 |
| D | 0 | + | 0 | 0 | 0 | 0 |
| 0 | 0 | 0 | (+) | 0 | 0 | 0 |
| **0** | 0 | 0 | 0 | (+) | 0 | 0 |
| **0** | 0 | 0 | 0 | 0 | (+) | 0 |
| **SecSA** | 0 | 0 | 0 | 0 | 0 | + |
| **e, D** | + | + | 0 | 0 | 0 | 0 |
| **0** | (+) | 0 | (+) | 0 | 0 | 0 |
| **0** | (+) | 0 | 0 | (+) | 0 | 0 |
| **0** | (+) | 0 | 0 | 0 | (+) | 0 |
| **e, SecSA** | + | 0 | 0 | 0 | 0 | + |
| **D, K** | 0 | + | + | 0 | 0 | 0 |
| **D, SA** | 0 | + | 0 | + | 0 | 0 |
| **D** | 0 | + | 0 | 0 | (+) | 0 |
| **D, SecSA** | 0 | + | 0 | 0 | 0 | + |

(fortgesetzt)

| Ausgehende Wellenfront | Eingehende Wellenfront/ Brechende Fläche | | | | | |
|---|---|---|---|---|---|---|
| Sec. Koma | Einfallswinkel e | Brechwert D | Koma K | Sph. Aberration SA | Sec. Koma SecK | Sec. Sph. Aberr SecSA |
| 0 | 0 | 0 | (+) | (+) | 0 | 0 |
| 0 | 0 | 0 | (+) | 0 | (+) | 0 |
| SecSA | 0 | 0 | (+) | 0 | 0 | + |
| 0 | 0 | 0 | 0 | (+) | (+) | 0 |
| SecSA | 0 | 0 | 0 | (+) | 0 | + |
| SecSA | 0 | 0 | 0 | 0 | (+) | + |
| e, D, K | + | + | + | 0 | 0 | 0 |
| e, D, SA | + | + | 0 | + | 0 | 0 |
| e, D, SecK | + | + | 0 | 0 | + | 0 |
| e, D, SecSA | + | + | 0 | 0 | 0 | + |
| e, K, SA | + | 0 | + | + | 0 | 0 |
| 0 | (+) | 0 | (+) | 0 | (+) | 0 |
| e, SecSA | + | 0 | (+) | 0 | 0 | + |
| D, K, SA | 0 | + | + | + | 0 | 0 |
| D, K | 0 | + | + | 0 | (+) | 0 |
| D, K, SecSA | 0 | + | + | 0 | 0 | + |
| D, SA | 0 | + | 0 | + | (+) | 0 |
| D, SA, SecSA | 0 | + | 0 | + | 0 | + |
| D, SecSA | 0 | + | 0 | 0 | (+) | + |
| 0 | 0 | 0 | (+) | (+) | (+) | 0 |
| SecSA | 0 | 0 | (+) | (+) | 0 | + |
| SecSA | 0 | 0 | (+) | 0 | (+) | + |
| SecSA | 0 | 0 | 0 | (+) | (+) | + |
| e, D, K, SA | + | + | + | + | 0 | 0 |
| e, D, K, SecK | + | + | + | 0 | + | 0 |
| e, D, K, SecSA | + | + | + | 0 | 0 | + |
| e, D, SA, SecK | + | + | 0 | + | + | 0 |
| e, D, SA, SecSA | + | + | 0 | + | 0 | + |
| e, D, SecK, SecSA | + | + | 0 | 0 | + | + |
| e, K, SA | + | 0 | + | + | (+) | 0 |
| e, K, SA, SecSA | + | 0 | + | + | 0 | + |
| e, SecSA | + | 0 | (+) | 0 | (+) | + |
| e, SecSA | + | 0 | 0 | (+) | (+) | + |
| D, K, SA | 0 | + | + | + | (+) | 0 |
| D, K, SA, SecSA | 0 | + | + | + | 0 | + |

(fortgesetzt)

| Ausgehende Wellenfront | Eingehende Wellenfront/ Brechende Fläche | | | | | |
|---|---|---|---|---|---|---|
| Sec. Koma | Einfallswinkel e | Brechwert D | Koma K | Sph. Aberration SA | Sec. Koma SecK | Sec. Sph. Aberr SecSA |
| **D, K, SecSA** | 0 | + | + | 0 | (+) | + |
| **D, SA, SecSA** | 0 | + | 0 | + | (+) | + |
| **SecSA** | 0 | 0 | (+) | (+) | (+) | + |
| **e, D, K, SA, SecK** | + | + | + | + | + | 0 |
| **e, D, K, SA, SecSA** | + | + | + | + | 0 | + |
| **e, D, K, SecK, SecSA** | + | + | + | 0 | + | + |
| **e, D, SA, SecK, SecSA** | + | + | 0 | + | + | + |
| **e, K, SA, SecSA** | + | 0 | + | + | (+) | + |
| **D, K, SA, SecSA** | 0 | + | + | + | (+) | + |
| **e, D, K, SA, SecK, SecSA** | + | + | + | + | + | + |

Die Sec. sph. Aberration der ankommenden Wellenfront und/oder brechenden Fläche hat immer Einfluss auf die Sec. sph. Aberration der austretenden Wellenfront. Die Sec. Koma der ankommenden Wellenfront und/oder brechenden Fläche hat nur Einfluss auf die Sec. sph. Aberration der austretenden Wellenfront in Verbindung mit Brechwert und schrägem Auftreffen. Die sph. Aberration der ankommenden Wellenfront und/oder brechenden Fläche hat nur Einfluss auf die Sec. Sph. Aberration der austretenden Wellenfront in Verbindung mit Brechwert und/oder (Koma und schrägem Auftreffen).

Die Koma der ankommenden Wellenfront und/oder brechenden Fläche hat nur Einfluss auf die Sec. Sph. Aberration der austretenden Wellenfront in Verbindung mit Brechwert und/oder schrägem Auftreffen. Der Brechwert der ankommenden Wellenfront und/oder brechenden Fläche hat immer einen Einfluss auf die Sec. sph. Aberration der austretenden Wellenfront.

Die Abbildungsfehler höherer Ordnungen der auftreffenden Wellenfront oder Fläche haben keinen Einfluss auf die niedrigen Ordnungen der austretenden Wellenfront. Z.B. hat die sph. Aberration der eintretenden Wellenfront oder Fläche keinen Einfluss auf die sph. Wirkung der austretenden Wellenfront.

Die Abbildungsfehler niedriger Ordnungen der auftreffenden Wellenfront oder Fläche haben (meist) einen Einfluss auf die höheren Ordnungen der austretenden Wellenfront (z.B. der Brechwert auf die Sph. Aberration). Der Brechwert der Fläche oder ankommenden Wellenfront hat Einfluss auf alle geraden Abbildungsfehler der austretenden Wellenfront (z.B. auf die Sph. Aberration und die Secondary Sph. Aberration). Der Brechwert der Fläche oder ankommenden Wellenfront hat nur Einfluss auf die ungeraden Abbildungsfehler der austretenden Wellenfront in Kombination mit einem ungeraden Abbildungsfehler niedriger Ordnung. Insbesondere auf Koma der austretenden Wellenfront hat der Brechwert der Fläche oder ankommenden Wellenfront nur in Kombination mit schrägem Auftreffen der Wellenfront einen Einfuß oder auf Secondary Koma nur in Kombination mit schrägem Auftreffen der Wellenfront oder Koma.

Die (k-1)-te Ordnung der Fläche oder ankommenden Wellenfront hat nur Einfluss in Kombination mit schrägem Auftreffen der Wellenfront und Brechwert der'Fläche oder ankommenden Wellenfront auf die k-te Ordnung der austretenden Wellenfront. Insbesondere die Koma (k-1=3) der Fläche oder ankommenden Wellenfront hat nur Einfluss auf die sph. Aberration (k=4) der austretenden Wellenfront in Kombination mit Brechwert und schrägen Auftreffen oder Äquivalent sph. Aberration (k-1) auf Secondary Koma (k).

Weitere Merkmale, Vorteile und Eigenschaften bevorzugter Ausführungsformen der Erfindung werden anhand der nachfolgenden nicht beschränkenden Beispiele erkennbar.

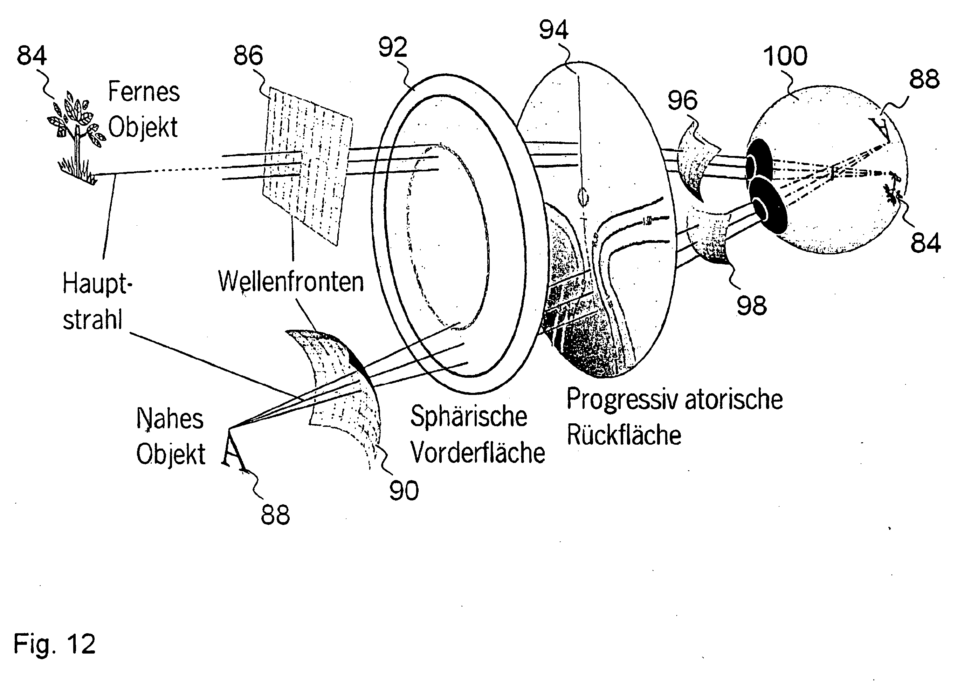

Fig. 12 zeigt eine schematische Darstellung des physiologischen und physikalischen Modells eines Brillenglases in einer vorgegebenen Gebrauchsstellung, welches der individuellen Brillenglasberechnung bzw. Optimierung zugrunde liegt. In Fig. 12 ist zu erkennen, daß die Strahlen von einem unendlich entfernten Objekt 84 alle parallel verlaufen, was sich in einer ebenen Wellenfront 86 widerspiegelt. Im Gegensatz dazu divergieren die Strahlen, die von einem nahen Objekt 88 ausgehen. Entsprechend ist die Wellenfront 90 gewölbt. Das Brillenglas, welches eine vorzugsweise sphärische Vorderfläche 92 und eine individuelle berechnete progressive-atorische Rückfläche 94 aufweist, muss nun dafür sorgen, daß jede Wellenfront 96, 98 auf der Augenseite vorzugsweise so gekrümmt ist, daß das entsprechende Objekt 84, 88 scharf auf der Netzhaut des Auges 100 abgebildet wird. Idealerweise müssen diese Wellenfronten augenseitig für alle Blickrichtungen gleich stark gekrümmt sein.

Zur Berechnung des Brillenglases wird vorzugsweise eine flexible Flächengestaltung der individuell zu berechnenden progressiven Fläche mit einer Mehrzahl an Bewertungsstellen (vorzugsweise über 7000 Bewertungsstellen) eingesetzt, wobei jeder dieser Bewertungsstellen eine eigene lokale Wellenfrontdurchrechnung zugeordnet wird. Die individuelle progressive Fläche wird vorzugsweise mittels Minimierung einer Zielfunktion, welche an den Bewertungsstellen ausgewertet wird, und unter Berücksichtigung des physiologischen Sehmodells optimiert. Auf diese Weise ist es möglich, durch individuelle Wellenfrontdurchrechnungen sehr schnell und damit online nach dem Bestelleingang die Optimierung eines Brillenglases nach der variablen Zielfunktion durchzuführen.

Die Berechnung des Brillenglases umfaßt vorzugsweise eine Optimierung mit mehr als 2000 Optimierungsparametern in einem hochdimensionalen Raum. Für die so vorgenommene Echtzeit-Online-Optimierung können Multiprozessor-Großrechner eingesetzt werden.

Vorzugsweise werden bei der individuellen Optimierung des Brillenglases nicht nur Abbildungsfehler niedriger Ordnung (Sphäre, Zylinder, Prisma), sondern auch Abbildungsfehler höherer Ordnung (z.B. Koma und sphärische Abberation) minimiert. Diesbezüglich wird z.B. auf US 7,063,421 B1 verwiesen. Die Fertigung des individuell berechneten Brillenglases erfolgt z.B. mittels Präzisionsmaschinen, vorzugsweise CNC-Schleif- und Poliermaschinen, welche die berechneten Flächendaten mit einer Genauigkeit in $\mu$m-Bereich umsetzten können.

Vorzugsweise wird bei der Optimierung der individuellen Brillengläser insbesondere die Listing'sche Regel berücksichtigt.

**Patentansprüche**

1. Verfahren zum Herstellen eines Brillenglases für einen Brillenträger umfassend:

   a) Erfassen von individuellen Benutzerdaten bzw. Anwendungsdaten des Brillenträgers umfassend ein Erfassen zumindest eines Abbildungsfehlers höherer Ordnung für zumindest ein Auge des Brillenträgers; und
   Entwerfen eines Brillenglases unter Berücksichtigung des erfassten Abbildungsfehlers höherer Ordnung, umfassend:
   b) Festlegen eines Designentwurfs für das Brillenglas mit einer Vielzahl von Bewertungsstellen;
   c) Ermitteln eines Verlaufs von Hauptstrahlen durch die Vielzahl von Bewertungsstellen;
   d) Festlegen einer lokalen Wellenfront zu jedem der Hauptstrahlen in einer Umgebung des jeweiligen Hauptstrahls;
   e) Ermitteln optischer Eigenschaften des Brillenglases an den Bewertungsstellen durch Bestimmen eines Einflusses des Brillenglases auf die lokalen Wellenfronten in einer Umgebung der jeweiligen Bewertungsstelle, wobei die ermittelten optischen Eigenschaften einen Astigmatismus $A_{glas}(i)$ des Brillenglases an der Bewertungsstelle i, welcher um einen Restastigmatismus $A_{ist}(i)$ von der in den Benutzerdaten für eine Vollkorrektion geforderten astigmatischen Wirkung abweicht, eine dioptrische Wirkung $D_{glas}(i)$ des Brillenglases an der Bewertungsstelle i, welche um eine Restwirkung $D_{ist}(i)$ von der in den Benutzerdaten für eine Vollkorrektion geforderten dioptrischen Wirkung abweicht, und zumindest einen Wert $Z_{glas}(i)$ eines Maßes einer Aberration höherer Ordnung des Brillenglases an der Bewertungsstelle i umfasst, welcher um einen Restfehler $Z_{ist}(i)$ von der in den Benutzerdaten für eine Vollkorrektion geforderten Korrekturwirkung abweicht;
   f) Bewerten des Designentwurfs in Abhängigkeit von den ermittelten optischen Eigenschaften und den individuellen Benutzerdaten,
   wobei für jede Bewertungsstelle ein Wert $A_{soll}(i)$ einer Fehlkorrektion des Astigmatismus, ein Wert $D_{soll}(i)$ einer Fehlkorrektion der dioptrischen Wirkung und ein Wert $Z_{soll}(i)$ einer Fehlkorrektion für den zumindest einen Abbildungsfehler höherer Ordnung vorgegeben wird, und
   wobei der Entwurf des Brillenglases im Hinblick auf eine Minimierung einer Zielfunktion

$$F = \sum_i g_A(i) \cdot \left(A_{Ist}(i) - A_{Soll}(i)\right)^2 + g_D(i) \cdot \left(D_{Ist}(i) - D_{Soll}(i)\right)^2 + g_Z(i) \cdot \left(Z_{Ist}(i) - Z_{Soll}(i)\right)^2$$

modifiziert wird, wobei Gewichtungsfunktionen g vorgesehen werden; und

g) Fertigen des Brillenglases nach dem ermittelten Design.

2. Verfahren nach Anspruch 1, wobei die individuellen Benutzerdaten bzw. Anwendungsdaten des Brillenträgers optische Korrektionsdaten einer Fehlsichtigkeit des Brillenträgers und Gebrauchsdaten bezüglich einer individuellen Positionierung des Brillenglases für den Brillenträger und/oder bezüglich einer individuellen Sehaufgabe des Brillenträgers umfassen.

3. Verfahren nach einem der vorangegangenen Ansprüche, wobei das Festlegen eines Designentwurfs für das Brillenglas ein Festlegen eines Koordinatensystems und ein Darstellen zumindest einer Startfläche des Brillenglases in dem Koordinatensystem zumindest teilweise durch Koeffizienten umfasst, von denen die zumindest eine Startfläche nur lokal abhängt.

4. Verfahren nach einem der vorangegangenen Ansprüche, wobei jedem Hauptstrahl eine Objektentfernung in Abhängigkeit von den erfassten Benutzerdaten zugeordnet wird und wobei die lokale Wellenfront in Abhängigkeit von der dem jeweiligen Hauptstrahl zugeordneten Objektentfernung festgelegt wird.

5. Verfahren nach einem der vorangegangenen Ansprüche, wobei das Ermitteln des Verlaufs der Vielzahl von Hauptstrahlen ein Ermitteln von Durchstoßpunkten und Durchstoßwinkeln der Hauptstrahlen durch die Brillenglasoberflächen umfasst und wobei das Bestimmen des Einflusses des Brillenglases auf die lokalen Wellenfronten umfasst:

   - Bestimmen der schrägen Dicke des Glases entlang der jeweiligen Hauptstrahlen im Brillenglas;
   - Bestimmen der Krümmungen der objektseitigen Wellenfronten; und
   - Bestimmen der Hauptkrümmungen und -richtungen der Brillenglasoberflächen an den Durchstoßpunkten.

6. Verfahren nach einem der vorangegangenen Ansprüche, wobei das Erfassen von Abbildungsfehlern höherer Ordnung ein Bestimmen einer Aberrationsfunktion, insbesondere einer nur vom radialen Abstand r von der Pupillenmitte abhängige Aberrationsfunktion $W_A(r)$ für das zumindest eine Auge des Brillenträgers umfasst.

7. Verfahren nach Anspruch 6, wobei die Aberrationsfunktion $W(r)$ für das zumindest eine Auge gemäß

$$W_A(r) = \sum_i \frac{S_i}{i!} r^i = S_1 * r + \frac{S_2}{2} * r^2 + \frac{S_3}{6} * r^3 + \frac{S_4}{24} * r^4 ....$$

nach Potenzen des Abstands r von der Pupillenmitte entwickelt wird.

8. Verfahren nach einem der vorangegangen Ansprüche, wobei das Entwerfen eines Brillenglases ein Festlegen einer Aberrationsfunktion des Brillenglases auf Basis der Aberrationsfunktion des Auges umfasst.

9. Verfahren nach Anspruch 8, wobei das Festlegen der Aberrationsfunktion $W_G(R)$ des Brillenglases als Funktion eines Abstands R von einem Zentrierpunkt des Brillenglases ein Skalieren der Aberrationsfunktion $W_A(r)$ des Auges mittels eines Ersetzens des Abstands r durch einen Abstand $R \cdot \dfrac{R_P}{R_t}$ umfasst, mit einem Pupillenradius $R_P$ für das zumindest eine Auge des Brillenträgers und einem Transformationsradius $R_t$, welcher größer ist als der Pupillenradius $R_P$ und nicht größer ist als der Radius $R_{G,max}$ des größten Kreises um den Zentrierpunkt des Brillenglases, der zumindest einen Punkt des Brillenglases umfasst.

10. Verfahren nach einem der vorangegangenen Ansprüche, ferner umfassend ein Festlegen einer Pupillensensorikfunktion zur Beschreibung einer abnehmenden sensorischen Gewichtung zum Pupillenrand hin und ein Festlegen eines Satzes von orthogonalen Funktionen für die Darstellung der lokalen Wellenfronten unter Berücksichtigung der Pupillensensorikfunktion.

11. Computerprogrammprodukt umfassend Programmcode, welcher, wenn in einem Computersystem geladen und ausgeführt, zur Durchführung eines Verfahrens nach einem der vorangegangenen Ansprüche ausgelegt ist.

**12.** System zum Entwerfen eines Brillenglases welches ausgelegt ist, ein Verfahren gemäß einem der Ansprüche 1 bis 10 auszuführen.

**Claims**

**1.** Method for the production of a spectacle lens for a spectacle wearer comprising:

a) acquiring individual user data or application data of the spectacle wearer including detecting at least one higher-order aberration for at least one eye of the spectacle wearer; and
designing a spectacle lens taking into consideration the detected higher-order aberration comprising:
b) establishing a draft design for the spectacle lens with a plurality of evaluation sites;
c) determining a course of principal rays by means of the plurality of evaluation sites;
d) establishing a local wavefront to each of the principal rays in a surrounding area of the respective principal ray;
e) determining optical properties of the spectacle lens at the evaluation sites by determining an influence of the spectacle lens on the local wavefronts in a surrounding area of the respective evaluation site, wherein the determined optical properties include an astigmatism $A_{lens}(i)$ of the spectacle lens at the evaluation site i, which deviates by a residual astigmatism $A_{actual}(i)$ from the astigmatic power required in the user data for a full correction, a dioptric power $D_{lens}(i)$ of the spectacle lens at the evaluation site i, which deviates by a residual power $D_{actual}(i)$ from the dioptric power required in the user data for a full correction, and at least one value $Z_{lens}(i)$ of a measure of a higher-order aberration of the spectacle lens at the evaluation site i, which deviates by a residual error $Z_{actual}(i)$ from the corrective action required in the user data for a full correction;
f) evaluating the draft design in dependence on the determined optical properties and the individual user data, wherein a value $A_{nominal}(i)$ of a false correction of the astigmatism, a value $D_{nominal}(i)$ of a false correction of the dioptric power and a value $Z_{nominal}(i)$ of a false correction for the at least one higher-order aberration are preset for each evaluation site, and
wherein the design of the spectacle lens is modified with respect to a minimisation of a target function

$$F = \sum_i g_A(i) \cdot (A_{actual}(i) - A_{nominal}(i))^2 + g_D(i) \cdot (D_{actual}(i) - D_{nominal}(i))^2 + g_z(i) \cdot (Z_{actual}(i) - Z_{nominal}(i))^2,$$

wherein weighting functions g are provided; and
g) fabricating the spectacle lens in accordance with the determined data.

**2.** Method according to claim 1, wherein the individual user data or application data of the spectacle wearer include optical correction data of a defective vision of the spectacle wearer and data of use with respect to an individual positioning of the spectacle lens for the spectacle wearer and/or with respect to an individual visual task of the spectacle wearer.

**3.** Method according to one of the preceding claims, wherein the establishing of a draft design for the spectacle lens includes establishing a coordinate system and plotting at least one starting surface of the spectacle lens in the coordinate system at least partially by means of coefficients, on which the at least one starting surface is only locally dependent.

**4.** Method according to one of the preceding claims, wherein each principal ray has an associated object distance in dependence on the determined user data, and wherein the local wavefront is determined in dependence on the object distance associated with the respective principal ray.

**5.** Method according to one of the preceding claims, wherein the determination of the course of the plurality of principal rays includes a determination of pass points and pass angles of the principal rays through the spectacle lens surfaces, and wherein the determination of the influence of the spectacle lens on the local wavefronts includes:

• determining the oblique thickness of the lens along the respective principal rays in the spectacle lens;
• determining the curvatures of the wavefronts on the object side; and
• determining the principal curvatures and directions of the spectacle lens surfaces at the pass points.

6. Method according to one of the preceding claims, wherein the determination of higher-order aberrations includes a determination of an aberration function, in particular an aberration function $W_A(r)$ dependent only on the radial distance r from the pupil centre for the at least one eye of the spectacle wearer.

7. Method according to claim 6, wherein the aberration function W(r) for the at least one eye is developed according to powers of the distance r from the pupil centre in accordance with

$$W_A(r) = \sum_i \frac{S_i}{i!} r^i = S_1 * r + \frac{S_2}{2} * r^2 + \frac{S_3}{6} * r^3 + \frac{S_4}{24} + r^4 \ldots$$

8. Method according to one of the preceding claims, wherein the designing of a spectacle lens includes a determination of an aberration function of the spectacle lens on the basis of the aberration function of the eye.

9. Method according to claim 8, wherein the determination of the aberration function $W_G(R)$ of the spectacle lens as a function of a distance R from a centring point of the spectacle lens includes a scaling of the aberration function $W_A(r)$ of the eye by replacing the distance r with a distances $R \cdot \frac{R_P}{R_t}$, with a pupil radius $R_p$ for the at least one eye of the spectacle wearer and a transformation radius $R_t$, which is larger than the pupil radius $R_P$ and not larger than the radius $R_{G,max}$ of the largest circle around the centring point of the spectacle lens, which includes at least one point of the spectacle lens.

10. Method according to one of the preceding claims, additionally comprising establishing a pupil sensing function for describing a decreasing sensory weighting towards the pupil edge and establishing a set of orthogonal functions for plotting the local wavefronts taking into consideration the pupil sensing function.

11. Computer program product comprising program code, which when loaded and executed in a computer system is designed to conduct a method according to one of the preceding claims.

12. System for designing a spectacle lens, which is designed to conduct a method according to one of claims 1 to 10.

**Revendications**

1. Procédé destiné à la fabrication d'un verre de lunettes pour un porteur de lunettes, comprenant :

a) l'acquisition des données utilisateur individuelles, respectivement, des données d'application, du porteur de lunettes, comprenant le relevé d'un moins une aberration optique d'ordre supérieur pour au moins un oeil du porteur de lunettes ; et
la conception d'un verre de lunettes en tenant compte de l'aberration optique d'ordre supérieur relevée, comprenant .
b) la mise au point d'un projet de conception pour le verre de lunettes à l'aide d'un grand nombre de points d'évaluation ;
c) la détermination d'une trajectoire des faisceaux principaux par l'intermédiaire du grand nombre de points d'évaluation ;
d) la mise au point d'un front d'ondes local correspondant à chacun des faisceaux principaux au voisinage du faisceau principal en cours d'examen ;
e) la détermination des propriétés optiques du verre de lunettes aux points d'évaluation par la détermination d'une influence du verre de lunettes sur les fronts d'onde locaux au voisinage du point d'évaluation en cours d'examen, les propriétés optiques déterminées comprenant un astigmatisme $A_{verre}(i)$ du verre de lunettes au point d'évaluation i, qui est différent, à hauteur d'un astigmatisme résiduel $A_{réel}(i)$, de celui des données utilisateur pour un influence astigmatique nécessaire pour une correction totale, comprenant un influence dioptrique $D_{verre}(i)$ du verre de lunettes au point d'évaluation i, qui est différente, à hauteur d'un influence dioptrique résiduelle $D_{réel}(i)$, de celle des données utilisateur pour un influence dioptrique nécessaire pour une correction totale, et comprenant une valeur $Z_{verre}(i)$ de la mesure d'une aberration d'ordre supérieur du verre de lunettes au point d'évaluation i, qui est différente, à hauteur d'un défaut résiduel $Z_{réel}(i)$, de celle des données utilisateur pour un influence de correction nécessaire pour une correction totale, ;

f) l'évaluation du projet de conception en fonction des propriétés optiques déterminées et des données utilisateur individuelles,

une valeur $A_{théorique}(i)$ d'une mauvaise correction de l'astigmatisme, une valeur $D_{théorique}(i)$ d'une mauvaise correction de l'influence dioptrique et une valeur $Z_{théorique}(i)$ d'une mauvaise correction étant prédéfinies pour au moins une aberration optique d'ordre supérieur, et

la conception du verre de lunettes étant modifiée en considération d'une minimisation d'une fonction cible

$$F = \sum_i g_A(i) \cdot (A_{réel}(i) - A_{théorique}(i))^2 + g_D(i) \cdot (D_{réel}(i) - D_{théorique}(i))^2 + g_Z(i) \cdot (Z_{réel}(i) - Z_{théorique}(i))^2$$

les fonctions de pondération g étant prédéfinies ; et

g) la fabrication du verre de lunettes selon la conception mise au point.

**2.** Procédé selon la revendication 1, les données utilisateur individuelles, respectivement, les données d'application, du porteur de lunettes comprenant des données de correction optique d'un défaut de vision du porteur de lunettes et des données utilisateur concernant un positionnement individuel du verre de lunettes pour le porteur de lunettes et/ou concernant une tâche visuelle du porteur de lunettes.

**3.** Procédé selon l'une des revendications précédentes, la mise au point d'un projet de conception pour le verre de lunettes comprenant la mise au point d'un système de coordonnées, et la représentation d'au moins une surface de départ du verre de lunettes dans le système de coordonnées au moins par des coefficients dont au moins une surface de départ ne dépend que localement.

**4.** Procédé selon l'une des revendications précédentes, où, à chaque faisceau principal est alloué un éloignement à l'objet en fonction des données utilisateur déterminées et où le front d'ondes local est mis au point en fonction de l'éloignement à l'objet alloué au faisceau principal correspondant.

**5.** Procédé selon l'une des revendications précédentes, la détermination de la trajectoire du grand nombre de faisceaux principaux comprenant la détermination de points d'intersection et d'angles d'intersection des faisceaux principaux avec les surfaces du verre de lunettes et l'évaluation de l'influence du verre de lunettes sur les fronts d'ondes locaux :

- l'évaluation de l'épaisseur dans le sens oblique du verre le long des faisceaux principaux dans le verre de lunettes ;
- l'évaluation des courbures des fronts d'ondes du côté objet ; et
- l'évaluation des courbures principales et des directions principales des surfaces du verre de lunettes aux points d'intersection.

**6.** Procédé selon l'une des revendications précédentes, l'évaluation des aberrations d'ordre supérieur comprenant la détermination d'une fonction d'aberration, notamment d'une fonction d'aberration $W_A(r)$, uniquement en rapport avec la distance radiale r par rapport au centre de la pupille, pour au moins un oeil du porteur de lunettes.

**7.** Procédé selon la revendication 6, la fonction d'aberration $W_A(r)$ pour au moins un oeil se développant selon

$$W_A(r) = \sum \frac{S_i}{i!} r^i = S_1 * r + \frac{S_2}{2} * r^2 + \frac{S_3}{6} * r^3 + \frac{S_4}{24} * r^4 \ldots$$

en fonction des puissances de la distance r par rapport au centre de la pupille.

**8.** Procédé selon l'une des revendications précédentes, la conception du verre de lunettes comprenant la mise au point d'une fonction d'aberration du verre de lunettes sur la base d'une fonction d'aberration de l'oeil.

**9.** Procédé selon la revendication 8, la mise au point de la fonction d'aberration $W_G(R)$ du verre de lunettes comprenant une mise à l'échelle de la fonction d'aberration $W_A(r)$ de l'oeil à l'aide du remplacement de la distance r par une

distance $R.R_p/R_t$, avec un rayon de pupille $R_p$ pour au moins un oeil du porteur de lunettes et un rayon de transformation $R_t$, qui est supérieur au rayon de pupille $R_p$ et n'est pas supérieur au rayon $R_{G.max}$ du cercle le plus grand autour du point de centrage du verre de lunettes, qui comprend au moins un point du verre de lunettes.

10. Procédé selon l'une des revendications précédentes, comprenant en outre une mise au point d'une fonction de la capacité sensorielle de la pupille pour la description d'une pondération sensorielle diminuant vers le bord de la pupille et la mise au point d'une suite de fonctions orthogonales pour la représentation des fronts d'onde locaux en tenant compte de la fonction de la capacité sensorielle de la pupille.

11. Produit d'un programme par ordinateur, comprenant des codes de programme qui, lorsqu'il est enregistré et exécuté sur un système d'ordinateur, est conçu pour l'exécution d'un procédé selon l'une des revendications précédentes.

12. Système destiné à la conception d'un verre de lunettes qui est conçu pour exécuter un procédé selon l'une des revendications 1 à 10.

Fig. 1

Fig. 2

Fig. 3

Fig. 4

**D$_1$**  **D$_2$**

Lichtrichtung

$d$

Objektpunkt

Bildpunkt

Wellenfront = Fläche
gleicher optischer Weglänge

Fig. 5

EP 2 115 527 B1

Fig. 6

48

**D**

Lichtrichtung
→

Objektpunkt

Bildpunkt

Fig. 7

EP 2 115 527 B1

Fig. 8

Lichtrichtung

$D_1$

Objektpunkt

Bildpunkt

EP 2 115 527 B1

Fig. 9

Fig. 10

Fig. 11

Fig. 12

**EP 2 115 527 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0192948 A1
- DE 10313275 A1
- WO 0184213 A2
- DE 10250093
- US 7063421 B1